# EUROPÄISCHE PATENTSCHRIFT

(11) **EP 3 198 173 B1**
(45) Veröffentlichungstag und Bekanntmachung des Hinweises auf die Patenterteilung: **17.10.2018**
(21) Anmeldenummer: 15748268.8
(22) Anmeldetag: 13.08.2015
(51) Int. Cl.: F16H 63/34, F16H 59/10, F16H 61/36

(54) **PARKSPERRENEINRICHTUNG FÜR EIN KRAFTFAHRZEUG**
PARKING LOCK DEVICE FOR A MOTOR VEHICLE
DISPOSITIF DE FREIN DE STATIONNEMENT POUR VÉHICULE AUTOMOBILE

(30) Priorität: 22.09.2014 DE 102014219037
(43) Veröffentlichungstag der Anmeldung: 02.08.2017
(73) Patentinhaber: ZF Friedrichshafen AG, 88046 Friedrichshafen (DE)
(72) Erfinder: BORMANN, Dirk, 49143 Bissendorf (DE)
(86) Internationale Anmeldenummer: PCT/EP2015/068612
(87) Internationale Veröffentlichungsnummer: WO 2016/045867

(56) Entgegenhaltungen:
- DE-A1-102009 028 128
- DE-A1-102010 029 704

## Beschreibung

Die vorliegende Erfindung betrifft eine Parksperreneinrichtung für Kraftfahrzeuggetriebe.

Das auf die Anmelderin zurückgehende Dokument DE 10 2009 028 128 A1 offenbart eine gattungsgemäße Parksperreneinrichtung für ein Kraftfahrzeug, welches ein Kraftfahrzeuggetriebe, insbesondere ein Automatikgetriebe, mit einer Parksperre und einen mit der Parksperre gekoppelten Gangwahlhebel umfasst. Der Gangwahlhebel ist in eine Parksperrenstellung zum Einlegen der Parksperre und aus der Parksperrenstellung heraus zum Lösen der Parksperre bewegbar. Ein erstes und zweites mechanisches Übertragungselement sind zwischen dem Gangwahlhebel und der Parksperre angeordnet. Das erste mechanische Übertragungselement ist mit dem Gangwahlhebel zum Übertragen einer von dem Gangwahlhebel ausgehenden Bewegungskraft gekoppelt, während das zweite mechanische Übertragungselement mit der Parksperre zum Übertragen einer von dem ersten mechanischen Übertragungselement ausgehenden Bewegungskraft gekoppelt ist. Die Parksperreneinrichtung weist eine bewegbare Koppeleinrichtung zum Übertragen der von dem ersten mechanischen Übertragungselement ausgehenden Bewegungskraft auf das zweite mechanische Übertragungselement auf. Die Koppeleinrichtung ist zwischen dem ersten und zweiten mechanischen Übertragungselement angeordnet und mit dem ersten und zweiten mechanischen Übertragungselement gekoppelt. Die Parksperreneinrichtung ist als ein modulares Bauteil in einer Kraftübertragungsstrecke zwischen dem Gangwahlhebel und der Parksperre einsetzbar.

Bei modernen Kraftfahrzeugen werden zahlreiche Assistenzsysteme bereitgestellt, mittels welchen die Sicherheit und ein Bedienkomfort erhöht werden soll. Beispielsweise finden insbesondere bei Kraftfahrzeugen mit Getriebeautomaten sogenannte intelligente bzw. pilotierte Parkassistenzsysteme Eingang, mittels welchen ein Kraftfahrzeug selbständig, mit anderen Worten autonom, ohne eine Mitwirkung des Fahrers, eingeparkt werden können soll. Beispielsweise soll das Kraftfahrzeug in der Lage sein, ohne Anwesenheit des Fahrers autonom auf einen Stellplatz zu fahren oder in eine Parklücke einzuparken.

Mit der vorliegenden Erfindung soll die eingangs beschriebene Parksperreneinrichtung weitergebildet und verbessert werden. Es soll dabei eine verbesserte Parksperreneinrichtung bereitgestellt werden, welche konstruktiv einfach ausgelegt ist und sich im Besonderen für ein vorstehend beschriebenes Parkassistenzsystem eignet.

Die oben genannte Aufgabe wird durch eine Parksperreinrichtung gemäß Anspruch 1 gelöst. Vorteilhafte Weiterbildungen ergeben sich aus den abhängigen Ansprüchen.

Die Parksperreneinrichtung nach der vorliegenden Erfindung umfasst eine bewegbare Koppeleinrichtung zum Übertragen der von dem ersten mechanischen Übertragungselement ausgehenden Bewegungskraft auf das zweite mechanische Übertragungselement. Die Koppeleinrichtung ist zwischen dem ersten und zweiten mechanischen Übertragungselement angeordnet und mit dem ersten und zweiten Übertragungselement gekoppelt.

Die vorliegende Erfindung zeichnet sich dadurch aus, dass die Parksperreneinrichtung eine Entkoppeleinrichtung zum Entkoppeln einer Kopplung zwischen der Koppeleinrichtung und dem ersten oder zweiten Übertragungselement in der Parksperrenstellung des Gangwahlhebels aufweist, was einem Entkopplungszustand der Entkoppeleinrichtung entspricht. Die Entkoppeleinrichtung korrespondiert damit zu einer Einrichtung zum Lösen bzw. Entkoppeln einer Kopplung bzw. lösbaren Verbindung. Die Kopplung zwischen der Koppeleinrichtung und dem ersten oder zweiten Übertragungselement ist somit wenigstens in der Parksperrenstellung des Gangwahlhebels lösbar. Damit kann eine üblicherweise feste Verbindung zwischen dem ersten und zweiten Übertragungselement wiederholbar getrennt bzw. entkoppelt bzw. gelöst werden. Das zweite mechanische Übertragungselement ist damit unabhängig von einer Bewegung des ersten mechanischen Übertragungselements bzw. des Gangwahlhebels betätigbar. Somit lässt sich beispielsweise eine eingelegte Parksperre, welche mittels Verbringen des Gangwahlhebels in die Parksperrenstellung aktiviert worden ist, trotz Stellung des Gangwahlhebels in der Parksperrenstellung wieder auslegen, wodurch das Kraftfahrzeug in einen fahrbereiten Zustand versetzt werden kann. Der Gangwahlhebel verbleibt dabei in seiner Parksperrenstellung und kann beispielsweise mittels eines Sperrelementes in seiner Bewegung gesperrt sein und mittels eines Entsperrelements wieder entsperrt werden.
Die Parksperreneinrichtung nach der vorliegenden Erfindung weist zum Bewegen des zweiten Übertragungselementes ferner ein Schiebeelement auf. Das Schiebeelement ist vorgesehen, das zweite mechanische Übertragungselement relativ zu dem ersten mechanischen Übertragungselement in dem Entkopplungszustand zum Lösen bzw. Auslegen der Parksperre zu bewegen. Unter einem Schiebeelement ist damit ein Element zu verstehen, welches wenigstens zwischen zwei Positionen in entgegengesetzten Richtungen beweglich und eingerichtet ist, ein weiteres Element zu bewegen, wobei eine dafür erforderliche Kraftübertragung zwischen dem Schiebeelement und dem weiteren Element mittels einer Anlage oder einer lösbaren oder unlösbaren Verbindung realisierbar ist. Die initiierte Bewegung des weiteren Elementes kann vorzugsweise rotatorisch in Form einer Drehbewegung, translatorisch, weiter bevorzugt geradlinig, in Form wenigstens einer durch Druckkraft bedingten Schiebebewegung oder einer durch Zugkraft bedingten Ziehbewegung, oder einer Kombination aus einer rotatorischen und translatorischen Bewegung erfolgen. Eine Schiebebewegung ist damit eine Bewegung in eine Richtung, wobei die Bewegung durch eine Druck- oder Zugkraft bewirkt sein kann.

Eine Parksperre zum Betätigen durch eine Parksperreneinrichtung nach der vorliegenden Erfindung kann beispielsweise durch eine übliche Sperrmechanik wie eine Sperrklinke ausgebildet sein, welche in eine Verzahnung eines auf einer Getriebeabtriebswelle angeordneten Parksperrenrades in Eingriff bringbar ist.

Ein mechanisches Übertragungselement im Sinne der vorliegenden Erfindung korrespondiert zu einem Bauteil, das ausgelegt ist, wenigstens eine Zug- oder Druckkraft zu übertragen. Dazu kann das mechanische Übertragungselement vorzugsweise durch einen Seilzug oder eine Schubstange oder einer Kombination daraus ausgebildet sein. Vorzugsweise ist das erste mechanische Übertragungselement eine Schubstange. Eine Verwendung einer Schubstange eignet sich insbesondere für kürzere und/oder geradlinige Kraftübertragungswege. Weiterhin bevorzugt ist das zweite mechanische Übertragungselement durch einen Seilzug ausgebildet. Ein Seilzug eignet sich insbesondere für längere und/oder nicht-geradlinige Kraftübertragungswege.

Nach einer bevorzugten Ausführungsform der vorliegenden Erfindung ist die Koppeleinrichtung mit dem ersten oder zweiten mechanischen Übertragungselement mittels einer Eingriffseinrichtung umfassend wenigstens ein quer zu der Bewegungsachse bewegbares Eingriffselement und eine Aufnahme, in welche das Eingriffselement eingreifbar ist, lösbar gekoppelt oder koppelbar und mit dem anderen mechanischen Übertragungselement zueinander unverschieblich verbunden oder verbindbar. Dadurch kann zuverlässig eine lösbare Kopplung zwischen dem ersten oder zweiten mechanischen Übertragungselement und der Koppeleinrichtung geschaffen werden. Dabei ist es zunächst unerheblich, ob die Koppeleinrichtung mit dem in der Parksperrenstellung unbeweglichen ersten mechanischen Übertragungselement oder mit dem in der Parksperrenstellung in dem Entkopplungszustand beweglichen zweiten mechanischen Übertragungselement lösbar oder zueinander unverschieblich verbindbar oder verbunden ist. Vorzugsweise ist die Koppeleinrichtung aber mit dem zweiten mechanischen Übertragungselement unverschieblich verbunden. Mit anderen Worten ist die Koppeleinrichtung vorzugweise mit dem zweiten mechanischen Übertragungselement in dem Entkopplungszustand gemeinsam beweglich verbunden oder verbindbar. Die Verbindung kann dabei mittels einer üblichen Schraub-, Klemm-, Steck-, Rast- oder ähnlichen Verbindung realisiert sein. Die Koppeleinrichtung ist demnach vorzugsweise lösbar mit dem ersten mechanischen Übertragungselement gekoppelt oder koppelbar, wobei die lösbare Kopplung mittels der Eingriffseinrichtung erfolgt. Damit kann beispielsweise eine nachträgliche Montage der Parksperreneinrichtung in einem Kraftübertragungsweg zwischen einer Wählhebelvorrichtung und einer Kraftfahrzeuggetriebevorrichtung ermöglicht werden. Dabei kann wenigstens eine freie Anschlussstelle beispielsweise des zweiten mechanischen Übertragungselements ohne die Notwendigkeit einer Anpassung genutzt werden. Für das erste mechanische Übertragungselement kann vorzugsweise ein Formteil mit der Koppeleinrichtung bereitgestellt werden, wobei das Formteil und die Koppeleinrichtung über die Eingriffseinrichtung aufeinander abstimmbar sind. Beispielsweise können das bewegbare Eingriffselement mit der Koppeleinrichtung und die Aufnahme mit dem ersten mechanischen Übertragungselement, weiter bevorzugt mit dem Formteil bereitgestellt werden, wobei das Formteil mit dem ersten mechanischen Übertragungselement verbindbar ist und in einem verbundenen Zustand weiter bevorzugt ein freies Ende des ersten mechanischen Übertragungselements ausbildet. Alternativ dazu können das Eingriffselement mit dem ersten mechanischen Übertragungselement, weiter bevorzugt mit dem Formteil, und die Aufnahme mit der Koppeleinrichtung ausgebildet oder bereitgestellt sein. Weiter bevorzugt kann das Formteil durch ein plattenförmiges Element ausgebildet sein, welches in eine mit der Koppeleinrichtung ausgebildete Aufnahme für das Formteil einbringbar ist. Mittels des Formteils kann alternativ oder zusätzlich eine freie Anschlussstelle des ersten mechanischen Übertragungselements ohne die Notwendigkeit einer Anpassung verwendet werden. Alternativ dazu kann das erste mechanische Übertragungselement Bestandteil der Parksperreneinrichtung sein, wobei das erste mechanische Übertragungselement im Vorwege der Montage auf die zu koppelnde Wählhebelvorrichtung anpassbar ist. Die vorstehend bevorzugten Ausführungsformen eignen sich insbesondere für eine nachträglich montierbare Parksperreneinrichtung in dem Kraftübertragungsweg zwischen der Wählhebel- und Kraftfahrzeuggetriebevorrichtung, wobei diese unterschiedlich ausgestaltete Anschlussstellen aufweisen können.

Gemäß einer bevorzugten Ausführungsform weist die Entkoppeleinrichtung ein verschiebbares Entkoppelelement zum Bewegen des Eingriffselements in einen eingriffsfreien Zustand auf. Damit ist ein eingriffsfreier Zustand bzw. ein Entkoppelzustand zwischen der Koppeleinrichtung und dem mechanischen Übertragungselement mittels einer Relativverschiebung des Entkoppelelements zu dem Eingriffselement erreichbar. Weiter bevorzugt ist das Entkoppelelement entlang der Bewegungsachse der Koppeleinrichtung verschiebbar und weist eine Gleitfläche auf, entlang welcher ein mit dem wenigstens einem Eingriffselement ortsfest verbundenes Gleitelement gleitbar ist, wobei sich die Gleitfläche schräg zu einer Bewegungsachse des wenigstens einen Eingriffselements erstreckt. Weiterhin bevorzugt ist die Gleitfläche durch wenigstens zwei sich gegenüberliegende Gleitflächenbegrenzungen eingefasst, wobei die Gleitflächenbegrenzungen einen unterschiedlichen Abstand entlang der Bewegungsachse der Koppeleinrichtung zu einem, dem Gleitelement nahen vorderen Endes des Entkoppelelements haben. Vorzugsweise erstreckt sich dabei die Gleitfläche unter einem spitzen Winkel zu einer Mittenachse des Entkoppelelements ausgehend von der dem vorderen Ende nahen Gleitflächenbegrenzung, wobei die Mittenachse parallel zu der Bewegungsachse der Koppeleinrichtung verläuft. Damit kann das Entkoppelelement nach einer bevorzugten Ausführungsform wenigstens eine einseitig zu dem vorderen Ende spitz zulaufende Ausgestaltung haben. Vorzugsweise ist das vordere Ende des Entkoppelelements mit Bezug auf seine Mittenachse beidseitig der Mittenachse spitz zulaufend ausgebildet. Dabei weist jede spitz zulaufende Seite eine Gleitfläche auf, entlang welcher jeweils ein Gleitelement gleitbar ist. Jedes der Gleitelemente ist ortsfest mit einem bewegbaren Eingriffselement verbunden. Die bewegbaren Eingriffselemente liegen weiter bevorzugt unter Zwischenlage der jeweils einem Eingriffselement zugeordneten Aufnahmen zueinander beabstandet, insbesondere entlang einer gemeinsamen Bewegungsachse bewegbar, gegenüber.

Beispielsweise kann das Eingriffselement durch einen Zapfen ausgebildet sein, welcher entlang seiner Erstreckungsachse in der Koppeleinrichtung beweglich gelagert ist, und einen Vorsprung aufweist, der das Gleitelement ausformt. Der Vorsprung kann vorzugsweise schräg zu der Erstreckungsachse des Zapfens von diesem abragen. Dadurch kann eine bewegliche Lagerung und eine Koppelstelle zum Bewegen des Zapfens in unterschiedlichen Ebenen realisiert werden.

Weiterhin bevorzugt ist das Eingriffselement unter einer Federvorspannung beweglich gelagert. Beispielsweise kann ein Federelement, insbesondere eine Druckfeder vorgesehen sein, welche das Eingriffselement mit einer Federdruckkraft beaufschlagt und es somit in die Aufnahme vorgespannt eingreifen lässt. Dadurch lässt sich das Eingriffselement automatisch in den Eingriffszustand verbringen, sobald die Federdruckkraft größer als eine auf den Zapfen beispielsweise von der Entkoppeleinrichtung einwirkende Gegendruckkraft ist. Zusätzlich kann damit ein zuverlässig haltender Eingriffszustand erreicht werden. Eine Anordnung des Federelementes ist frei wählbar, solange die Federkraft auf den Zapfen in Richtung der Aufnahme wirken kann. Das Federelement kann den Zapfen dabei mittels einer Anlage an den Zapfen oder über ein Zwischenanlageelement mit der Federdruckkraft beaufschlagen. Neben einer einfachen konstruktiven Ausgestaltung der Entkoppeleinrichtung kann diese ferner in den Ausmaßen bedarfsgerecht angepasst werden.

Vorzugsweise ist das Entkoppelelement ein platten- oder rahmenförmiges, insbesondere mehreckiges, Bauteil mit wenigstens einer Seitenfläche, welches die Gleitfläche ausbildet. Dadurch kann ein flaches Entkoppelelement bereitgestellt werden, wodurch die Ausmaße der Entkoppeleinrichtung weiterhin bedarfsgerecht beeinflussbar sind.

Weiter bevorzugt formen das Entkoppelelement und das Schiebeelement eine bauliche Einheit aus. Das Schiebeelement weist dabei eine Anlagefläche zur Anlage mit der Koppeleinrichtung auf, wobei die Gleitfläche des Entkoppelelements der Anlagefläche des Schiebeelements in Schieberichtung derart vorgelagert ist, dass bei Verschieben der baulichen Einheit zunächst das wenigstens eine Eingriffselement in den eingriffsfreien Zustand bewegbar und anschließend die Koppeleinrichtung verschiebbar ist. Das Entkoppelelement und das Schiebeelement können vorzugsweise aus einem Stück gefertigt sein. Alternativ dazu können das Entkoppelelement und das Schiebeelement vorzugsweise aus wenigstens zwei miteinander verbundenen Komponenten zusammengesetzt sein. Dadurch können das Entkoppelelement und das Schiebeelement funktional in einer baulichen Einheit bzw. einem einstückigen oder mehrstückigen Bauteil zusammengefasst werden. Die Parksperreneinrichtung ist somit kompakter ausbildbar.

Gemäß einer bevorzugten Ausführungsform der vorliegenden Erfindung weist die Parksperreneinrichtung wenigstens eine Antriebseinrichtung zum Antreiben der Entkoppeleinrichtung und des Schiebelements auf. Somit kann zum Antreiben der Entkoppeleinrichtung und des Schiebelements vorzugsweise eine gemeinsame Antriebseinrichtung vorgesehen sein. Alternativ bevorzugt können für die Entkoppeleinrichtung und für das Schiebeelement jeweils eine Antriebseinrichtung vorgesehen sein. Dadurch lassen sich die Entkoppeleinrichtung und das Schiebeelement zueinander unterschiedlich antreiben. Die wenigstens eine Antriebseinrichtung ist vorzugsweise wenigstens mit einer Steuer- oder Regeleinrichtung oder mit einer Steuer- und Regeleinrichtung elektrisch verbindbar, welche die wenigstens eine Antriebseinrichtung zum Antreiben der Entkoppeleinrichtung und des Schiebeelements steuert und/oder regelt.

Weiter bevorzugt umfasst die Antriebseinrichtung ein Schneckengetriebe mit einer Schnecke und ein mit der Schnecke gekoppeltes Schneckenrad. Das Schneckenrad weist einen Mitnehmer zum Antreiben einer Kniehebeleinrichtung auf, welche mit der Entkoppeleinrichtung und dem Schiebeelement gekoppelt oder koppelbar ist. Der Mitnehmer ragt weiter bevorzugt von einer Radialfläche des Schneckenrades ab. Weiterhin bevorzugt ist der Mitnehmer randnah am äußeren Umfang des Schneckenrades angeordnet. Mittels der Kniehebeleinrichtung kann auf einfache Weise eine rotatorisch eingebrachte Antriebskraft in eine translatorische Antriebskraft umgewandelt werden.

Die Kniehebeleinrichtung weist vorzugsweise eine verschiebbare Kniegelenkverbindung zum relativen Bewegen eines ersten freien Kniehebelendes zu einem zweiten freien Kniehebelende auf, wobei die Kniehebeleinrichtung eine Gleitfläche umfasst, entlang welcher der Mitnehmer zum Verschieben der Kniegelenkvorrichtung gleitbar ist. Weiter bevorzugt umfasst die Kniehebeleinrichtung einen Ausleger, welcher mit der Kniegelenkverbindung verbunden oder verbindbar ist und die Gleitfläche ausformt. Der Ausleger ist ausgebildet, eine auf den Ausleger einwirkende Druckkraft auf die Kniehebeleinrichtung zu übertragen. Die Kniegelenkverbindung kann somit beabstandet zu der Antriebseinrichtung angeordnet werden, wodurch eine konstruktive Überschneidung der Kniegelenkverbindung mit dem Schneckenrad vermieden werden kann. Die Parksperreneinrichtung kann damit im Bereich der Antriebs- und Kniehebeleinrichtung bauhöhenreduziert ausgebildet werden. Ferner ist eine Kraftübertragungsstelle des Auslegers vorzugsweise wenigstens in einem Bereich der Kniegelenkverbindung oder angrenzend dazu angeordnet. Dadurch kann eine optimierte Kraftübertragung von dem Ausleger zu der Kniegelenkverbindung erreicht werden. Somit kann eine antriebsschwächere und damit bauraumreduzierte Antriebseinrichtung zum Antrieb der Kniehebeleinrichtung und der damit gekoppelten oder koppelbaren Komponenten wie die Entkoppeleinrichtung und das Schiebeelement ausreichen.

Vorzugsweise umfasst die Antriebseinrichtung einen Aktuator, welcher die Schnecke aktuatorisch antreibt, wobei der Aktuator weiter bevorzugt mit der Steuer- und Regeleinrichtung elektrisch verbunden oder verbindbar ist.

Weiterhin bevorzugt weist die Kniehebeleinrichtung einen ersten und einen zweiten Kniehebel auf, welche über die Kniehebelgelenkverbindung miteinander verbunden sind, wobei das erste freie Kniehebelende durch den ersten Kniehebel und das zweite freie Kniehebelende durch den zweiten Kniehebel ausgebildet sind. Weiter bevorzugt sind das erste und zweite freie Kniehebelende auf einer gemeinsamen Achse angeordnet, welche eine Bewegungsachse für die Relativbewegung zwischen dem ersten und zweiten freien Kniehebelende definiert. Weiterhin bevorzugt sind das erste freie Kniehebelende ortsfest und das zweite freie Kniehebelende beweglich vorgesehen. Damit ist die Kniegelenkverbindung zu der Anordnungsachse bzw. Bewegungsachse relativ verschiebbar, wobei der erste und zweite Kniehebel abhängig von einer Relativposition des ersten und zweiten freien Kniehebelendes einen vorbestimmten Winkel ausgehend von der Kniegelenkverbindung als Scheitelpunkt einschließen. Das erste und zweite freie Kniehebelende definieren dabei je einen Schenkelpunkt. Die Schenkelpunkte weisen abhängig von einem Wert des eingeschlossenen Winkels einen entsprechenden Abstand zueinander auf. Bei einem Winkelwert von 0° bzw. 360° liegen die Schenkelpunkte auf einer gemeinsamen Achse mit dem Scheitelpunkt, wobei die Schenkelpunkte entlang einer Bewegungsachse der Relativbewegung den geringsten Abstand zueinander aufweisen. Die Schenkelpunkte befinden sich dabei auf einer identischen Seite mit Bezug zu dem Scheitelpunkt. Bei einem Winkelwert von 180° liegen die Schenkelpunkte auf einer gemeinsamen Achse unter Zwischenlage des Scheitelpunktes, wobei die Schenkelpunkte entlang der Bewegungsachse der Relativbewegung den größten Abstand zueinander aufweisen. Die Schenkelpunkte befinden sich nun auf unterschiedlichen Seiten mit Bezug zu dem Scheitelpunkt. Je größer ein Winkelwert in einem Bereich von 0° bis 180° ist, desto größer ist ein Abstand zwischen den Schenkelpunkten bzw. zwischen dem ersten und zweiten freien Kniehebelende entlang der Bewegungsachse der Relativbewegung. Dadurch kann ein maximaler Bewegungsweg bzw. Abstand zwischen dem ersten und zweiten freien Kniehebelende abhängig von dem Winkelwert festgelegt werden.

Besonders bevorzugt weist die Kniehebeleinrichtung eine Anschlageinrichtung zum Begrenzen der Relativbewegung bzw. des Abstandes zwischen dem ersten und zweiten freien Kniehebelende auf. Die Anschlageinrichtung umfasst vorzugsweise ein erstes Anschlagselement mit einem ersten Anschlag und ein zweites Anschlagselement mit einem zweiten Anschlag zum Anschlag bzw. zur Anlage mit dem ersten Anschlag, wobei der erste und zweite Anschlag mit unterschiedlichen Kniehebeln auf einer gemeinsamen Seite der Kniehebeleinrichtung vorgesehen sind. Ein Anschlagszustand, bei welchem der erste und zweite Anschlag aneinander anschlagen bzw. anliegen, begrenzt somit eine Relativbewegung der Kniehebeleinrichtung bzw. einen Abstand zwischen dem ersten und zweiten freien Kniehebelende. Beispielsweise kann der Anschlagszustand eine Ausgangsstellung für die Kniehebeleinrichtung definieren, aus welcher die Kniehebeleinrichtung in eine davon unterschiedliche Stellung und wieder zurück bewegbar ist. Das erste Anschlagselement kann vorzugsweise einen Steg mit einer den ersten Anschlag ausformenden Seitenfläche ausbilden, welche beispielsweise einen Winkel von 90° mit einer Mittenachse des zugeordneten Kniehebels einschließt. Das zweite Anschlagselement kann vorzugsweise durch den zugeordneten Kniehebel ausgebildet sein, wobei der zweite Anschlag durch eine dem ersten Anschlag nahe Seitenfläche des zugeordneten Kniehebels ausgeformt sein kann. Je nach Anordnung und Ausgestaltung des Stegs an dem zugeordneten Kniehebel kann ein vordefinierter Winkel zwischen dem ersten und zweiten Kniehebel für eine Ausgangsstellung der Kniehebeleinrichtung bedarfsgerecht bereitgestellt werden. Das erste Anschlagselement kann vorzugsweise ortsfest mit dem zugeordneten Kniehebel oder an diesem verschieblich und weiter bevorzugt befestigbar vorgesehen sein.

Nach einer bevorzugten Ausführungsform umfasst die Parksperreneinrichtung eine Arretierungs- und Freigabeeinrichtung zum Arretieren des Schiebeelements in einer von einer Ausgangsstellung unterschiedlichen Position und zum Freigeben der Arretierung. Besonders bevorzugt umfasst die Arretierungs- und Freigabeeinrichtung einen Shiftlockmagneten mit einem Anker, welcher bei Bestromung des Shiftlockmagneten zum Eingriff in eine mit dem Schiebeelement gekoppelte Ankeraufnahme wenigstens teilweise ausfahrbar ist und bei Nichtbestromung des Shiftlockmagneten eine einen Nichteingriffszustand definierende, wenigstens teilweise eingefahrene Position einnimmt. Dadurch kann das Schiebeelement in der von der Ausgangsstellung unterschiedlichen Position zuverlässig gehalten werden, wodurch ein unbeabsichtigtes Einlegen der Parksperre vermeidbar ist.
Weiter bevorzugt ist die Ankeraufnahme durch ein von einem zugeordneten Kniehebel abragenden Anschlagselement ausgebildet, wobei die Ankeraufnahme vorzugsweise durch eine stirnseitige Bohrung an einem freien stirnseitigen Ende des Anschlagselements ausgeformt ist. Die Arretierungs- und Freigabeeinrichtung kann damit funktional mit der Anschlagseinrichtung zusammengefasst werden, wodurch eine geringere Anzahl an Bauteilen erforderlich ist.

Besonders bevorzugt ist die Arretierungs- und Freigabeeinrichtung derart angeordnet, dass das Schiebeelement in einer ersten Stellung mit maximalem Abstand zu der Ausgangsstellung oder in einer zweiten Stellung mit einem Abstand kleiner als der maximale Abstand, besonders bevorzugt nach Durchschreiten der ersten Stellung, arretierbar ist. Beispielsweise kann die Kniehebeleinrichtung zum Einnehmen einer überstreckten Stellung eingerichtet sein, zum Erreichen welcher die den Scheitelpunkt definierende Kniegelenkverbindung die Bewegungsachse der Relativbewegung zu überschreiten hat, wodurch ein Winkel zwischen dem ersten und zweiten Kniehebel von größer als 180° eingenommen wird. Dabei durchläuft das Schiebeelement zunächst die erste Stellung, in welcher das Schiebeelement den größten Abstand zu seiner Ausgangsstellung aufweist, und nimmt anschließend die zweite Stellung ein, in welcher das Schiebeelement einen kleineren Abstand als den maximalen Abstand zu der Ausgangsstellung aufweist und arretierbar ist. Alternativ bevorzugt kann das Schiebelement in der ersten Stellung und in der zweiten Stellung arretierbar sein. Dazu ist beispielsweise der Anker des Shiftlockmagneten derart einzurichten, dass der Anker unterschiedliche Ausfahrpositionen einnehmen und halten kann. Damit können auf einfache Weise unterschiedliche Arretierungsstellungen für das Schiebeelement bereitgestellt werden.

Gemäß einer bevorzugten Ausführungsform umfasst die Parksperreneinrichtung eine Rückstelleinrichtung zum Rückstellen des zweiten mechanischen Übertragungselements in seine Ausgangsposition. Die Rückstelleinrichtung umfasst vorzugsweise wenigstens ein Federelement, welches das zweite mechanische Übertragungselement mit einer in Richtung der Ausgangsposition wirkenden Druck- oder Zugkraft beaufschlagt. Dadurch kann sichergestellt werden, dass das zweite mechanische Übertragungselement in seine Ausgangsposition rückstellbar ist, sobald ein Betrag der Druck- oder Zugkraft des wenigstens einen Federelements größer als eine entgegenwirkende Kraft ist. Bei der entgegenwirkenden Kraft kann es sich beispielsweise um die Bewegungskraft zum Bewegen des zweiten mechanischen Übertragungselements aus der Ausgangsposition oder um eine Haltekraft zum Halten des zweiten mechanischen Übertragungselements in einer anderen Position als der Ausgangsposition handeln. Somit kann eine Notfallfunktion bereitgestellt werden, mittels welcher eine Parksperre in dem Entkopplungszustand automatisch einlegbar ist, um das Kraftfahrzeug bei Ausfall oder Fehlfunktion der Parksperreneinrichtung in dem Entkopplungszustand gegen ein unbeabsichtigtes Wegrollen zu sichern.

Vorzugsweise ist das wenigstens eine Federelement aus einer Druck- oder Zugfeder ausgebildet, welche mit dem zweiten mechanischen Übertragungselement federkraftbeaufschlagend gekoppelt ist. Unter federkraftbeaufschlagend ist eine Kopplung zu verstehen, bei welcher das zweite mechanische Übertragungselement in jeder der einnehmbaren Positionen mit einer Federkraft beaufschlagt ist. Dadurch kann eine zuverlässige Rückstellung bis in die Ausgangsposition aus jeder anderen Position heraus gewährleistet werden. Zur Realisierung der Federkraftbeaufschlagung kann neben dem wenigstens einen Federelement beispielsweise eine Halterung hergenommen werden, welche mit einem Ende des Federelements verbunden ist, während das andere Ende des Federelements mit dem zweiten mechanischen Übertragungselement gekoppelt ist. Die Halterung kann beispielsweise durch ein Gehäuse zur Aufnahme wenigstens des zweiten mechanischen Übertragungselements bereitgestellt sein. In diesem Fall kann die Halterung vorzugsweise durch eine Anlagefläche oder Befestigung ausgebildet sein, welche Teil einer Gehäusewandung des Gehäuses oder mit dieser verbunden ist. Alternativ dazu kann die Halterung mit einer anderen Komponente der Parksperreneinrichtung wie beispielsweise der Shiftlockmagnet bereitgestellt sein. Dabei kann die Halterung gleichfalls durch eine Anlagefläche oder Befestigung ausgebildet sein, welche durch eine Wandungsfläche des Shiftlockmagneten ausgeformt oder mit dieser befestigt ist.

Die Kopplung des wenigstens einen Federelements mit dem zweiten mechanischen Übertragungselement kann vorzugsweise über eine Anlage an oder eine Befestigung mit dem zweiten mechanischen Übertragungselement oder alternativ bevorzugt über ein zwischengelagertes Bauteil erfolgen, welches mit dem zweiten mechanischen Übertragungselement gekoppelt ist. Beispielsweise kann das zwischengelagerte Bauteil die Koppeleinrichtung sein, an welcher das zweite mechanische Übertragungselement zur zwangsgeführten Mitbewegung befestigt oder befestigbar ist. Alternativ bevorzugt kann das zwischengelagerte Bauteil die Entkoppeleinrichtung, insbesondere die Kniehebeleinrichtung sein, auf welche das wenigstens eine Federelement zum Rückstellen der Kniegelenkverbindung wirkt. Rückstellen umfasst das Verbringen einer Komponente oder eines Elementes von einer eingenommenen Position in seine Ursprungs- bzw. Ausgangsposition, aus welcher die Komponente oder das Element heraus in die eingenommene Position bewegt worden ist. Aus der Ursprungs- oder Ausgangsposition ist die Komponente oder das Element vorzugsweise wiederholbar in eine davon unterschiedliche Position bewegbar, wobei in der Ursprungs- oder Ruheposition ein Betrag der einwirkenden Federkraft am geringsten oder annähernd Null oder gleich Null ist.

Nach einer bevorzugten Ausführungsform umfasst die Parksperreneinrichtung ein Gehäuse mit einem Aufnahmeraum zur Aufnahme wenigstens der Koppeleinrichtung, der Entkoppeleinrichtung und des Schiebeelements. Ferner weist das Gehäuse einen zu dem Aufnahmeraum führenden ersten Durchlass für das erste mechanische Übertragungselement und einen zu dem Aufnahmeraum führenden zweiten Durchlass für das zweite mechanische Übertragungselement auf. Der erste und zweite Durchlass ermöglichen eine ungehinderte Kraftübertragung von dem Gangwahlhebel zu der Parksperreneinrichtung über das erste mechanische Übertragungselement sowie von der Parksperreneinrichtung zu der Parksperre über das zweite mechanische Übertragungselement, wobei eine Kopplung der Parksperreneinrichtung mit dem ersten und zweiten mechanischen Übertragungselement innerhalb des Gehäuses erfolgen kann. Weiterhin bevorzugt kann das Gehäuse weitere Komponenten nach einer der vorstehend bevorzugten Ausführungsformen aufnehmen.

Vorzugsweise kann das Gehäuse zweiteilig ausgebildet sein. Dabei kann vorzugsweise ein erstes Gehäuseteil zur Aufnahme und das zweite Gehäuseteil als Deckelelement zum Abdecken wenigstens des Aufnahmeraums vorgesehen sein. Das Deckelelement kann dabei mittels üblicher Verbindungsarten mit dem zweiten Gehäuseteil verbunden sein. Alternativ bevorzugt bilden das erste und zweite Gehäuseteil im zusammengesetzten Zustand den Aufnahmeraum aus, wobei jedes Gehäuseteil einen Teil des Aufnahmeraums ausformt.

Mittels des Gehäuses kann eine modulare Parksperreneinrichtung zum, insbesondere nachträglichen, Einbau in einen Kraftübertragungsweg zwischen dem Gangwahlhebel und der Parksperre bereitgestellt werden.

Weitere Merkmale und Vorteile der Erfindung ergeben sich aus der nachfolgenden Beschreibung von bevorzugten Ausführungsbeispielen der Erfindung, anhand der Figuren und Zeichnungen, die erfindungswesentliche Einzelheiten zeigen, und aus den Patentansprüchen. Die einzelnen Merkmale können je einzeln für sich oder zu mehreren in beliebiger Kombination bei einer bevorzugten Ausführungsform der Erfindung verwirklicht sein.

Bevorzugte Ausführungsbeispiele der Erfindung werden nachfolgend anhand der beigefügten Zeichnungen näher erläutert. Es zeigen:
- Fig. 1: eine schematische Draufsicht auf ein Gehäuseteil einer Parksperreneinrichtung nach einem bevorzugten Ausführungsbeispiel in einer Ausgangsstellung;
- Fig. 2: eine Schnittansicht entlang der Schnittlinie II-II der in Fig. 1 gezeigten Parksperreinrichtung;
- Fig. 3: eine Schnittansicht entlang der Schnittlinie III-III der in Fig. 1 gezeigten Parksperreinrichtung;
- Fig. 4: eine schematische Draufsicht auf das Gehäuseteil der in Fig. 1 gezeigten Parksperreneinrichtung in einer ersten Betätigungsstellung;
- Fig. 5: eine schematische Draufsicht auf ein Gehäuseteil einer Parksperreneinrichtung nach einem bevorzugten Ausführungsbeispiel in einer zweiten Betätigungsstellung;
- Fig. 6: eine schematische Draufsicht auf das Gehäuseteil der in Fig. 5 gezeigten Parksperreneinrichtung in einer dritten Betätigungsstellung;
- Fig. 7: eine schematische Draufsicht auf das Gehäuseteil der in Fig. 1 gezeigten Parksperreneinrichtung in einer vierten Betätigungsstellung;
- Fig. 8: ein Ablaufdiagramm eines Verfahrens zum Herstellen einer Parksperreinrichtung nach einem bevorzugten Ausführungsbeispiel; und
- Fig. 9: ein Ablaufdiagramm eines Verfahrens zum Auslegen einer Parksperre mittels einer Parksperreinrichtung nach einem bevorzugten Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

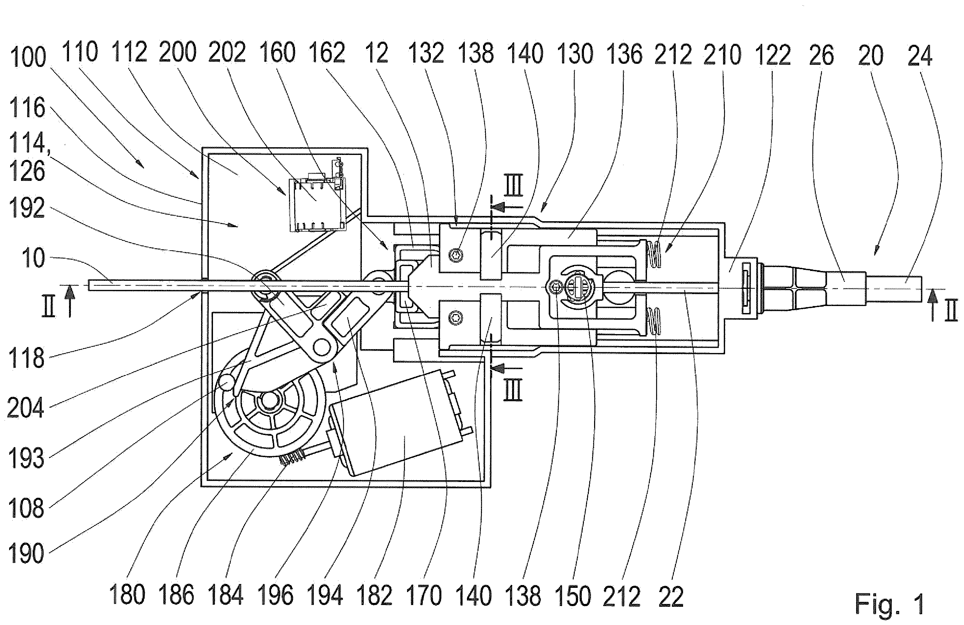

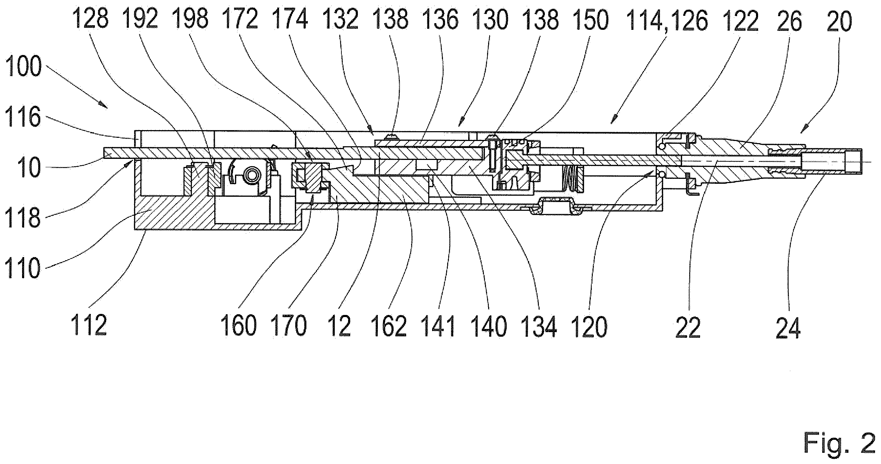

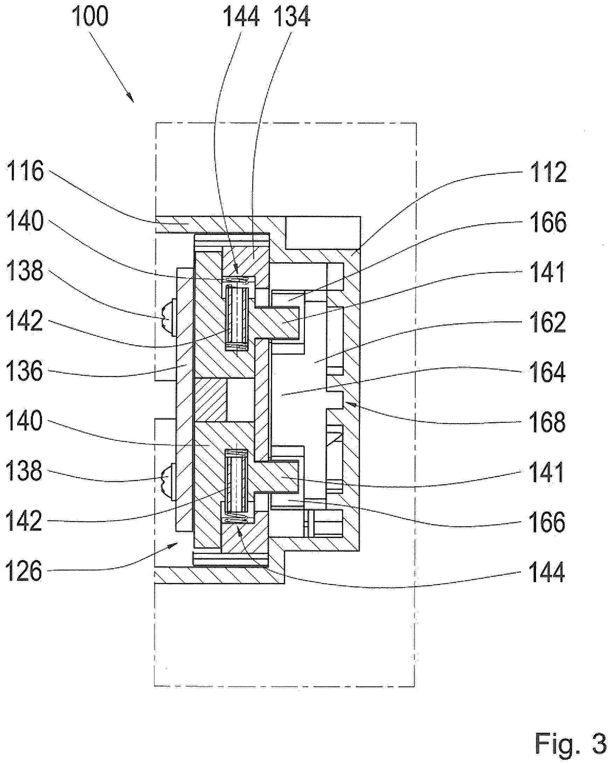

Fig. 1 zeigt eine schematische Draufsicht auf ein Gehäuseteil 110 einer Parksperreneinrichtung 100 nach einem bevorzugten Ausführungsbeispiel, wobei sich die Parksperreneinrichtung 100 in einer Ausgangsstellung befindet. Fig. 2 zeigt eine Schnittansicht entlang der Schnittlinie II-II der Parksperreinrichtung 100 und Fig. 3 eine Schnittansicht entlang der Schnittlinie III-III.

Das Gehäuseteil 110 ist wannenartig mit einem Gehäuseboden 112, einer Gehäuseöffnung 114, welche dem Gehäuseboden 112 gegenüberliegt und einer die Gehäuseöffnung 114 begrenzenden Gehäusewand 116, welche von dem Gehäuseboden 112 abragt, ausgebildet. Die Gehäuseöffnung 112 ist mit einem Gehäusedeckel abdeckbar, der an dem Gehäuseteil 110 mittels eines üblichen Verbindungsmittels wie beispielsweise einer Rast-, Klemm-, Steck-, Schraubverbindung oder einen ähnlichen lösbaren Verbindung lösbar befestigbar ist. Dadurch kann ein Innenraum des Gehäuseteils 110 gegenüber äußeren Einflüssen geschützt verschlossen oder abgedichtet werden.

Die Gehäusewand 116 weist auf einer Seite einen ersten Gehäusedurchlass 118 in Form einer Aussparung für ein erstes mechanisches Übertragungselement 10 auf. Das erste mechanische Übertragungselement 10 ist mit einem nicht dargestellten Ende mit einem Gangwahlhebel eines Kraftfahrzeuges verbunden, welcher zwischen verschiedenen Gangstufen bewegbar ist. Das erste mechanische Übertragungselement 10 nach diesem bevorzugten Ausführungsbeispiel ist eingerichtet, eine von dem Gangwahlhebel ausgehende Bewegungskraft wenigstens zum Einlegen einer Parksperre eines Kraftfahrzeuggetriebes zu übertragen. Dazu ist das erste mechanische Übertragungselement 10 nach diesem bevorzugten Ausführungsbeispiel durch eine Zug- und Druckstange ausgebildet. Nach einem alternativ bevorzugten Ausführungsbeispiel ist das erste mechanische Übertragungselement 10 durch einen oder mehrere Seilzüge ausgebildet. Das erste mechanische Übertragungselement 10 ist in dem ersten Gehäusedurchlass 118 wenigstens in Kraftübertragungsrichtung, welche parallel zu einer Längsachse des ersten mechanischen Übertragungselements 10 verläuft, frei, also ungehindert bewegbar.

Die Gehäusewand 116 weist auf einer dem ersten Gehäusedurchlass 118 gegenüberliegenden Seite einen zweiten Gehäusedurchlass 120 in Form einer Bohrung für ein zweites mechanisches Übertragungselement 20 auf. Das zweite mechanische Übertragungselement 20 ist mit einem nicht dargestellten freien Ende mit der Parksperre des Kraftfahrzeuggetriebes verbunden. Das zweite mechanische Übertragungselement 20 ist eingerichtet, eine von dem ersten mechanischen Übertragungselement 10 ausgehende Bewegungskraft an die Parksperre wenigstens zum Einlegen der Parksperre zu übertragen. Ferner ist das zweite mechanische Übertragungselement 20 eingerichtet, eine Kraft zum Auslegen der Parksperre zu übertragen. Dazu ist das zweite mechanische Übertragungselement 20 nach diesem Ausführungsbeispiel durch einen Seilzug ausgebildet. Der Seilzug 20 umfasst eine Seilzugseele 22, welche von einer Seilzughülle 24 umhüllt ist, in welcher die Seilzugseele 22 frei bewegbar ist. In einem Bereich des zweiten freien Endes des Seilzuges 20 umfasst dieser ein Seilzugwiderlager 26, welcher an einem freien Ende der Seilzughülle 24 befestigt ist und einen Durchlass für die Seilzugseele 22 zum freien Bewegen der Seilzugseele 22 relativ zu dem Seilzugwiderlager 26 aufweist. Der Seilzugwiderlager 26 ist an einer Gehäusebefestigung 122 befestigt, welche außenseitig an der Gehäusewand 116 im Bereich der zweiten Gehäuseöffnung 120 angeordnet ist. Dadurch kann sich die Seilzugseele 22 innerhalb der Seilzughülle 24 und des Seilzugwiderlagers 26 relativ zu diesen frei bewegen. Die Seilzugseele 22 ist in dem zweiten Gehäusedurchlass 120 wenigstens in Kraftübertragungsrichtung, welche parallel zu einer Längsachse der Seilzugseele 22 verläuft, frei bewegbar.

Das erste 10 und zweite mechanische Übertragungselement 20 sind über eine Koppeleinrichtung 130 innerhalb des Gehäuseteils 110 miteinander gekoppelt. Der Innenraum 126 des Gehäuseteils 110 formt einen Aufnahmeraum zur Aufnahme der Koppeleinrichtung 130 aus. Die Koppeleinrichtung 130 umfasst ein Koppelelement 132 mit einer Grundplatte 134 und einer die Grundplatte 134 wenigstens teilweise überdeckenden Deckplatte 136. Die Deckplatte 136 ist mittels Schraubbefestigungen 138 mit der Grundplatte 134 verbunden. Das Koppelelement 132 weist zwischen der Grundplatte 134 und der Deckplatte 136 eine Formteilaufnahme für ein Formteil 12 auf, welches ortsfest mit dem ersten mechanischen Übertragungselement 10 verbunden ist und ein freies Ende für das erste mechanische Übertragungselement 10 definiert. Das Formteil 12 ist in der Formteilaufnahme entlang einer Kraftübertragungsrichtung einer von dem ersten mechanischen Übertragungselement 10 auf das zweite mechanische Übertragungselement 20 zu übertragenden Bewegungskraft beweglich gehalten. Nach diesem bevorzugten Ausführungsbeispiel ist dazu das Formteil 12 wenigstens in einem Abschnitt H-förmig ausgebildet, wobei die einander gegenüberliegenden innenseitigen Bereiche oder Flächen der H-Form jeweils Anlageflächen für das Koppelelement 132 ausbilden. Ein Abstand dieser innenseitigen Bereiche definiert damit einen relativen Bewegungsweg zwischen dem Formteil 12 und dem Koppelelement 132. Der Abstand dieser innenseitigen Bereiche entspricht somit einer Länge des Mittelsteges der H-Form. Das Koppelelement 132 weist entsprechend nach außen gerichtete Anlagebereiche oder Anlageflächen zur jeweiligen Anlage mit den innenseitigen Bereichen oder Flächen des Formteils 12 auf. Die jeweiligen zur Anlage vorgesehenen Bereiche oder Flächen des Formteils 12 bzw. des Koppelelementes 132 definieren somit jeweils abhängig von einer Bewegungsrichtung einen Stopp für eine Relativbewegung zwischen Formteil 12 und Koppelelement 132.

Das Koppelelement 132 ist mit dem Formteil 12 mittels einer Eingriffseinrichtung gekoppelt. Die Eingriffseinrichtung umfasst zwei gegenüberliegend, voneinander beabstandete Durchlässe zur jeweiligen Aufnahme eines in dem Durchlass beweglichen Eingriffselementes 140, wobei die Durchlässe mit dem Koppelelement 132 ausgeformt sind. Die der Eingriffseinrichtung zugeordneten Eingriffselemente 140 sind von dem Koppelelement 132 quer zu der Relativbewegungsrichtung des Formteils 12 zu dem Koppelelement 132 federvorgespannt beweglich gehalten. Dazu ist nach diesem bevorzugten Ausführungsbeispiel ein Federelement 142 zwischen dem Eingriffselement 140 und einer Federanlage 144 angeordnet, welche mit der Grundplatte 134 ausgeformt ist (Figur 3). Das Federelement 142 ist in einer Bohrung des Eingriffselements 140 aufgenommen, wobei die Bohrungsöffnung in einem montierten Zustand des Eingriffselements 140 mit dem Koppelelement 132 der Federanlage 144 gegenüberliegt. Das Federelement 142 ist ausgebildet, in einem entspannten Zustand aus der Bohrung herauszuragen und in dem montierten Zustand eine Federdruckkraft auf das Eingriffselement 140 auszuüben.

Die Eingriffseinrichtung umfasst ferner für jedes Eingriffselement 140 eine Eingriffsaufnahme, in welche das Eingriffselement 140 mit seiner Stirnseite mittels des Federelementes 142 elastisch vorgespannt eingreift. Die Eingriffsaufnahmen sind mit dem Formteil 12 ausgeformt.

Der Eingriff der Eingriffselemente 140 in das Formteil 12 quer zu einer Relativbewegungsrichtung des ersten mechanischen Übertragungselementes 10 und des Koppelelementes 132 erlaubt eine zuverlässige und haltbare Kopplung zwischen dem ersten mechanischen Übertragungselement 10 bzw. dem Formteil 12 und der Koppeleinrichtung 130 bzw. dem Koppelelement 132 entlang der Relativbewegungsrichtung. Die Kopplung ermöglicht somit in einem Eingriffszustand der Eingriffseinrichtung eine gemeinsame Bewegung des ersten mechanischen Übertragungselementes 10 und der Koppeleinrichtung 130.

Die Koppeleinrichtung 130 umfasst des Weiteren eine Befestigung 150 für ein freies Ende des zweiten mechanischen Übertragungselementes 20, im Besonderen für ein freies Ende der Seilzugseele 22. Die Befestigung 150 ist in einem dem zweiten mechanischen Übertragungselement 20 zugewandten Endabschnitt des Koppelelementes 132 angeordnet. Die Befestigung 150 ermöglicht eine Übertragung der von dem Koppelelement 132 ausgehenden Bewegungskraft auf das zweite mechanische Übertragungselement 20. Dadurch kann eine Bewegungskraft zwischen dem ersten mechanischen Übertragungselement 10 und dem zweiten mechanischen Übertragungselement 20 übertragen werden.

Die Parksperreneinrichtung 100 umfasst ferner eine Entkoppeleinrichtung 160 zum Entkoppeln der Kopplung zwischen der Koppeleinrichtung 130 und dem ersten mechanischen Übertragungselement 10. Die Entkoppeleinrichtung 160 ist in dem Aufnahmeraum 126 des Gehäuseteils 110 angeordnet. Die Entkoppeleinrichtung 160 weist ein Entkoppelelement 162 auf, welches zwischen dem Gehäuseboden 112 und dem Koppelelement 132 angeordnet und entlang einer Bewegungsachse des Koppelelementes 132 beweglich ist. Das Entkoppelelement 162 weist ein zu dem Koppelelement 132 weisendes V-förmig zulaufendes Ende mit einer stumpfen Spitze 164 auf. Die stumpfe Ausformung der Spitze 164 begünstigt eine Reduzierung des Abmaßes des Entkoppelelementes 162 entlang seiner Bewegungsachse. Die jeweilig zu der Bewegungsachse des Entkoppelelementes 162 schräg verlaufenden Schenkel 166 der V-Form bilden jeweils eine Gleitfläche zur gleitenden Anlage mit einem Gleitelement 141 aus, welches mit dem Eingriffselement 140, insbesondere aus einem Stück, ausgeformt ist und von diesem quer zu der Bewegungsachse des Eingriffselementes 140 abragt. Die Gleitfläche 166 gelangt mittels einer Relativbewegung zwischen dem Entkoppelelement 162 und dem Koppelelement 132 mit dem Gleitelement 141 in Anlage und führt bei einer Fortsetzung der Relativbewegung das mit dem Gleitelement 141 verbundene Eingriffselement 140 aus seinem Eingriff mit dem Formteil 12 heraus, wodurch die Kopplung zwischen dem ersten mechanischen Übertragungselement 10 und der Koppeleinrichtung 130 gelöst wird. Das Koppelelement 132 ist damit in dem Nichteingriffszustand des Eingriffselementes 140 entlang der Bewegungsachse des Koppelelementes 132 unabhängig von dem ersten mechanischen Übertragungselement 10 frei beweglich.
Die Koppeleinrichtung 130 weist des Weiteren ein Schiebeelement 170 zum Bewegen des zweiten mechanischen Übertragungselements 20 relativ zu dem ersten mechanischen Übertragungselement 10 in dem Entkopplungszustand zum Lösen der Parksperre auf. Das Schiebeelement 170 ist in dem Aufnahmeraum 126 zwischen dem ersten mechanischen Übertragungselement 10 und dem Gehäuseboden 112 angeordnet. Das Schiebeelement 170 ist nach diesem bevorzugten Ausführungsbeispiel einteilig mit dem Entkoppelelement 162 ausgeformt, wobei das Schiebeelement 170 dem V-förmigen Ende gegenüberliegend ausgebildet ist. Das Schiebeelement 170 und das Entkoppelelement 162 sind translatorisch geführt auf dem Gehäuseboden 112 bewegbar angeordnet. Der Gehäuseboden 112 weist in dem Aufnahmeraum 126 eine geradlinige Führung 113 auf, welche in das Schiebeelement 170 und das Entkoppelelement 162 eingreift. Die Führung 113 und das Schiebeelement 170 bzw. das Entkoppelelement 162 sind über ein Nut-Feder-System 168 miteinander gekoppelt. Dadurch ist das Schiebelement 170 mit dem Entkoppelelement 162 geradlinig geführt bewegbar.

Das Schiebeelement 170 weist einen Vorsprung 172 zur Anlage mit dem Koppelelement 132 auf. Der Vorsprung 172 ragt auf einer dem Gehäuseboden 112 abgewandten Oberflächenseite des Schiebeelementes 170 ab. Der Vorsprung 172 formt auf einer dem Koppelelement 132 zugewandten Seite einen Anlagebereich oder Anlagefläche 174 zur Anlage mit einem stirnseitigen Ende des Koppelelementes 132 aus.

Fig. 1 und Fig. 2 zeigen das Schiebeelement 170 in der Ausgangsstellung der Parksperreneinrichtung, welche eine Ausgangsstellung für das Schiebeelement 170 definiert. In der Ausgangsstellung des Schiebeelementes 170 ist die Anlagefläche 174 zu dem gegenüberliegenden stirnseitigen Ende des Koppelelementes 132 beabstandet.

Das Schiebeelement 170 und somit auch das Entkoppelelement 162 nach diesem bevorzugten Ausführungsbeispiel sind über eine Antriebseinrichtung 180 bewegbar oder antreibbar, welche in dem Aufnahmeraum 126 angeordnet ist. Die Antriebseinrichtung 180 umfasst einen Aktuator 182 mit einer Schnecke 184 und einem mit der Schnecke 184 abtriebsseitig gekoppelten Schneckenrad 186. Das Schneckenrad 186 weist einen von einer radialen Oberfläche des Schneckenrades 186 abragenden Mitnehmer 188 in Form eines Pins auf.

Die Antriebseinrichtung 180 umfasst des Weiteren eine Kniehebeleinrichtung 190, welche in dem Aufnahmeraum 126 zwischen dem Schneckenrad 186 und einem freien Ende des Schiebeelements 170 angeordnet ist. Die Kniehebeleinrichtung 190 weist einen ersten Kniehebel 192 und einen zweiten Kniehebel 194 auf, welcher mit dem ersten Kniehebel 192 über eine Kniegelenkverbindung 196 gelenkig verbunden ist. Die Kniegelenkverbindung 196 setzt sich aus einem Zapfen und einer Zapfenöffnung zusammen, in welcher der Zapfen drehbeweglich eingreift. Der Zapfen ist bei diesem bevorzugten Ausführungsbeispiel beispielhaft an einem freien Ende des zweiten Kniehebels 194 vorgesehen, während die Zapfenöffnung an einem zugeordneten freien Ende des ersten Kniehebels 192 ausgebildet ist. Die Längsachse des Zapfens bzw. die Mittelpunktachse der Zapfenöffnung definieren eine Drehachse, um welche der erste 192 und zweite Kniehebel 194 zueinander relativ drehbeweglich sind.

Der erste Kniehebel 192 ist in dem Gehäuseteil 110 mit seinem der Kniegelenkverbindung 196 gegenüberliegenden anderen freien Ende drehbeweglich gelagert. Das andere freie Ende weist eine Öffnung auf, in welche ein mit dem Gehäuseboden 112 ausgeformter Gehäusepin 128 eingreift. Damit ist die Kniehebeleinrichtung 190 um eine ortsfeste Drehachse drehbeweglich gelagert, wobei die Drehachse durch die Längsachse des Gehäusepins 128 definiert ist. Der erste Kniehebel 192 weist ferner einen Ausleger 193 auf, welcher von dem ersten Kniehebel 192 zwischen seinen freien Enden in Richtung des Schneckenrades 188 abragt. Der Ausleger 193 erstreckt sich in der Ausgangsstellung der Parksperreneinrichtung 100 in den Drehweg des Mitnehmers 188. Der Ausleger 193 weist eine Gleitfläche auf, entlang welcher der Mitnehmer 188 während einer Drehbewegung des Schneckenrades 186 gleitbar ist, wodurch der Ausleger 193 und somit die Kniehebeleinrichtung 190 während der Drehbewegung zwangsbewegbar sind. Dabei ist die Kniegelenkverbindung 196 auf einer Kreisbahn um die ortsfeste Drehachse der Kniehebeleinrichtung 190 bewegbar.

Der zweite Kniehebel 194 ist mit seinem weiteren freien Ende, welches der Kniegelenkverbindung 196 gegenüberliegt, mit dem Schiebeelement 170 verbunden. Die Verbindung erfolgt mittels eines Zapfengelenks 198, welches mit dem Schiebeelement 170 linear beweglich ist und welches eine Drehachse für den zweiten Kniehebel 194 definiert, um welche sich der Kniehebel 194 während einer Bewegung der Kniegelenkverbindung 196 dreht. Mittels der Kniehebeleinrichtung 190 kann der Drehantrieb des Schneckenrades 186 in einen Linearantrieb für das Schiebeelement 170 umgewandelt werden.

Die Parksperreneinrichtung 100 umfasst nach diesem bevorzugten Ausführungsbeispiel eine Arretierungs- und Freigabeeinrichtung 200 zum Arretieren des Schiebeelements 170 in einer von einer Ausgangsstellung unterschiedlichen Position und zum Freigeben der Arretierung. Die Arretierungs- und Freigabeeinrichtung 200 ist in dem Aufnahmeraum 126 angeordnet und umfasst einen Shiftlockmagneten 202 mit einem Anker 203, welcher bei Bestromung des Shiftlockmagneten 202 zum Eingriff in eine mit dem Schiebeelement 170 gekoppelte Ankeraufnahme 204 ausfahrbar ist und bei Nichtbestromung des Shiftlockmagneten 202 eine einen Nichteingriffszustand definierende Position einnimmt. Die Ankeraufnahme 204 ist an dem ersten Kniehebel 192 angeordnet und ragt von einer der Antriebseinrichtung 180 abgewandten Seite des ersten Kniehebels 192 geradlinig ab. Die Ankeraufnahme 204 weist eine Bohrung auf, in welche der Anker 203 des Shiftlockmagneten 202 im ausgefahrenen Zustand eingreift.

Die Ankeraufnahme 204 formt mit dem zweiten Kniehebel 194 eine Anschlageinrichtung zum Begrenzen der Bewegung der Kniegelenkverbindung 196. Die Ankeraufnahme 204 weist eine dem zweiten Kniehebel 194 zugewandte Anlagefläche für den zweiten Kniehebel 194 auf. Dabei ist die Ankeraufnahme 204 derart an dem ersten Kniehebel 192 angeordnet, dass die Kniehebeleinrichtung 190 in einer in Fig. 1 beispielhaft gezeigten Winkelstellung von 90° zwischen ersten 192 und zweiten Kniehebel 194 eine Ausgangsstellung einnimmt, aus welcher und in welche die Kniehebeleinrichtung 190 bewegbar ist. Damit ist ein Maß des linearen Bewegungswegs des Schiebeelements 170 abhängig von dem eingeschlossenen Winkel zwischen dem ersten 192 und zweiten Kniehebel 194 in der Ausgangsstellung der Kniehebeleinrichtung 190. Je kleiner der eingeschlossene Winkel in der Ausgangsstellung ist, desto größer ist der mögliche lineare Bewegungsweg des Schiebeelements 170.

Die Arretierungs- und Freigabeeinrichtung 200 ermöglicht ein Feststellen und Halten sowie ein bedarfsgerechtes oder notfallbedingtes Freigeben des Schiebeelementes 170 und der damit gekoppelten Komponenten in einer von der Ausgangsstellung unterschiedlichen Position des Schiebeelementes 170, in welcher die Parksperre ausgelegt ist.

Die Antriebseinrichtung 180 und die Arretierungs- und Freigabeeinrichtung 200 sind nach einem bevorzugten Ausführungsbeispiel elektrisch mit einer nicht dargestellten Steuer- und Regeleinrichtung verbunden, welche die Antriebseinrichtung 180 und die Arretierungs- und Freigabeeinrichtung 200 steuern und regeln. Beispielsweise kann die Steuer- und Regeleinrichtung Bestandteil eines Parkassistenzsystems sein, welches zum autonomen Parken des Kraftfahrzeuges eingerichtet ist.

Des Weiteren weist die Parksperreneinrichtung 100 eine Rückstelleinrichtung 210 zum Rückstellen des zweiten mechanischen Übertragungselementes 20 in die Ausgangsstellung, in welcher die Parksperre des Kraftfahrzeuggetriebes zum Einlegen veranlasst wird, auf. Fig. 1 zeigt ein bevorzugtes Ausführungsbeispiel der Rückstelleinrichtung 210. Die Rückstelleinrichtung 210 umfasst zwei Druckfedern 212, welche zwischen der Gehäusewand 116 im Bereich des zweiten Gehäusedurchlasses 120 und der Koppeleinrichtung 130 angeordnet sind. Die Druckfedern 212 sind in Fig. 1 andeutungsweise dargestellt. Die Druckfedern 212 erstrecken sich nach diesem bevorzugten Ausführungsbeispiel entgegen ihrer Darstellung bis zu der gegenüberliegenden Gehäusewand 116 im Bereich des zweiten Gehäusedurchlasses 120.

Fig. 2 zeigt ein weiteres bevorzugtes Ausführungsbeispiel der Rückstelleinrichtung 210. Im Unterschied zu Fig. 1 sind die beiden Druckfedern 212 zwischen einer mit der Gehäusewand 116 verbundenen Gehäusefederanlage 117 und der Koppeleinrichtung 130 angeordnet. Die Gehäusefederanlage 117 ist durch einen von der Gehäusewand 116 oder den Gehäuseboden 112 in den Aufnahmeraum 126 abragenden Vorsprung zum Abstützen der Druckfedern 212 ausgebildet. Nach einem bevorzugten Ausführungsbeispiel kann für jede der Druckfedern 212 ein Vorsprung oder für beide Druckfedern 212 ein gemeinsamer Vorsprung vorgesehen sein. Dadurch können kürzere und somit kostengünstigere Druckfedern für die Rückstelleinrichtung 210 verwendet werden. Die Gehäusefederanlage 117 kann zudem kostengünstig mit dem Gehäuseteil 110 in einem Verfahrensschritt ausgeformt werden. Beispielsweise kann das Gehäuseteil 110 aus einem spritzgegossenem Kunststoffmaterial ausgebildet sein.

Nach einem weiteren bevorzugten Ausführungsbeispiel sind weniger oder mehr als zwei Druckfedern 212 vorgesehen.

Die Rückstelleinrichtung 210 ermöglicht ein automatisches Rückstellen des zweiten mechanischen Übertragungselementes 20, sobald ein Betrag der Druckkraft in Richtung der Ausgangsstellung des zweiten mechanischen Übertragungselementes 20 größer als eine entgegenwirkende Kraft ist. Dadurch kann die Parksperre automatisch eingelegt werden. Somit kann eine Notfallfunktion bereitgestellt werden, bei welcher die Parksperre automatisch eingelegt und das Kraftfahrzeug gegen ein Wegrollen gesichert wird, wenn die Parksperreneinrichtung stromlos ist.

Fig. 1 zeigt die Parksperreneinrichtung 100 in einer Ausgangsstellung, in welcher die Parksperre beim Kraftfahrzeuggetriebe eingelegt ist. In dieser Ausgangsstellung befindet sich üblicherweise der Gangwahlhebel in der Parksperrenstellung, wobei der Gangwahlhebel in dieser Stellung festlegbar sein kann. Die Ausgangsstellung der Parksperreneinrichtung 100 definiert gleichfalls eine Ausgangsstellung für die der Parksperreinrichtung 100 zugeordneten und mit der Parksperreneinrichtung 100 gekoppelten Komponenten.

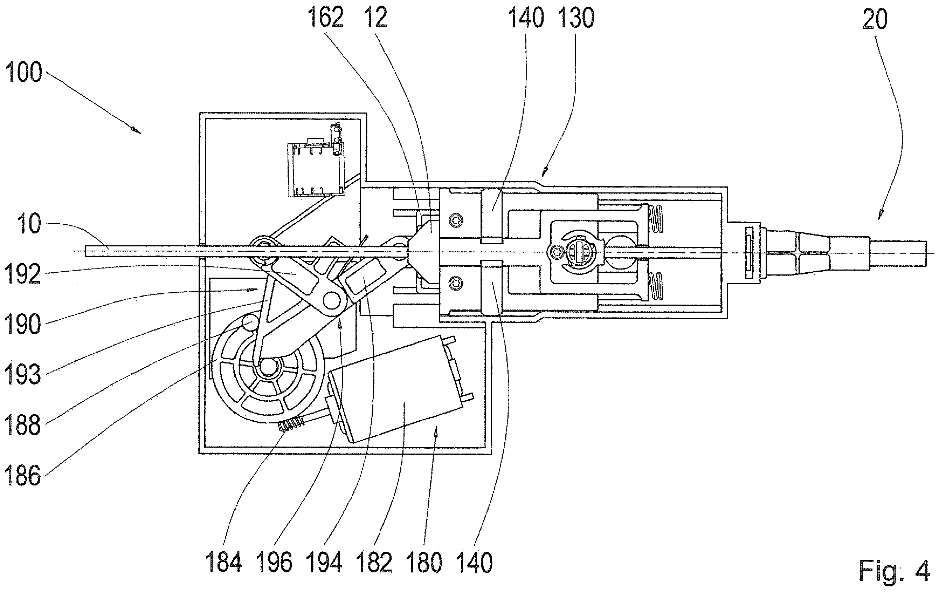

Fig. 4 zeigt eine schematische Draufsicht auf das Gehäuseteil 110 der in Fig. 1 gezeigten Parksperreneinrichtung 100, welche sich in einer ersten Betätigungsstellung befindet, deren Erreichen ein Lösen der Kopplung zwischen der Koppeleinrichtung 130 und dem ersten mechanischen Übertragungselement 10 bewirkt. Die erste Betätigungsstellung entspricht einem Entkopplungszustand der Entkoppeleinrichtung 160. Zum Erreichen der ersten Betätigungsstellung ist das Schneckenrad 186 mit dem Mitnehmer 188 durch den Aktuator 182 im Uhrzeigersinn vorbestimmt zu drehen, wodurch die Kniehebeleinrichtung 190 betätigt wird und sich die Kniegelenkverbindung 196 auf seiner Kreisbahn verschiebt. Die Verschiebung bewirkt eine lineare Verschiebung des Schiebeelements 170 und des Entkoppelelements 162 in Richtung des zweiten mechanischen Übertragungselementes 20. Dadurch gelangen die Gleitflächen 166 des Entkoppelelements 162 mit den Gleitelementen 141 der Eingriffselemente 140 in Gleitkontakt und verbringen die Eingriffselemente 140 aus dem Eingriffszustand mit dem Formteil 12 in den Entkopplungs- bzw. Nichteingriffszustand.

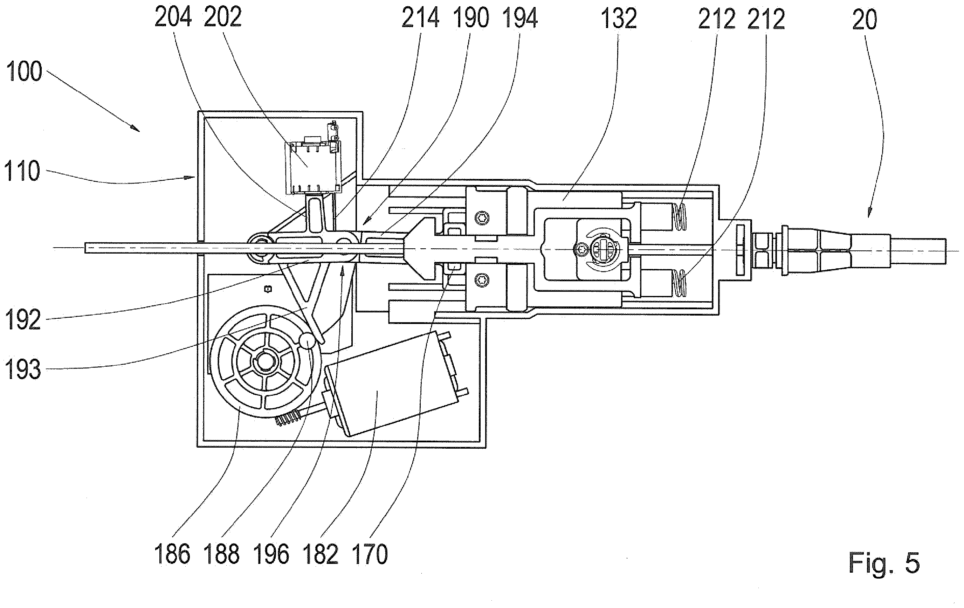

Fig. 5 zeigt eine schematische Draufsicht auf das Gehäuseteil einer Parksperreneinrichtung 100 nach einem bevorzugten Ausführungsbeispiel, welche sich in einer zweiten Betätigungsstellung befindet, deren Erreichen ein Auslegen der Parksperre des Kraftfahrzeuggetriebes bewirkte. Die Parksperreneinrichtung 100 nach diesem bevorzugten Ausführungsbeispiel unterscheidet sich von der vorstehend beschriebenen durch die Ausgestaltung der Rückstelleinrichtung 210. Die Rückstelleinrichtung 210 nach diesem bevorzugten Ausführungsbeispiel weist eine weitere Druckfeder 214 auf, welche zwischen dem Shiftlockmagneten 202 und der Kniehebeleinrichtung 190 angeordnet ist und die Kniegelenkverbindung 196 in der zweiten Betätigungsstellung mit einer Druckkraft beaufschlagt. Die weitere Druckfeder 214 unterstützt ein Lösen der Arretierung nach Freigabe der Verbindung zwischen dem Shiftlockmagneten 202 und der Ankeraufnahme 204, indem die Kniegelenkverbindung 196 in Richtung der Ausgangsstellung wenigstens bis zu einer Winkelstellung von kleiner als 180° zwischen dem ersten 192 und zweiten Kniehebel 194 zurückgedrängt wird. Nach Erreichen dieser Winkelstellung wird die Kniehebeleinrichtung 190 in die Ausgangsstellung über die von den Druckfedern 212 ausgeübten Druckkräfte zurückbewegt.

Die zweite Betätigungsstellung wird ausgehend von der ersten Betätigungsstellung erreicht, indem das Schneckenrad 186 im Uhrzeigersinn durch den Betrieb des Aktuator 182 vorbestimmt weitergedreht wird. Dadurch wird der Mitnehmer 188 mitgeführt, welcher den Ausleger 193 zwangsbewegt, wodurch die Kniegelenkverbindung 196 auf seiner Kreisbahn fortbewegt wird. Die Kniehebeleinrichtung 190 nimmt in der zweiten Betätigungsstellung eine überstreckte Stellung ein. Überstreckt bedeutet dabei, dass der zwischen dem ersten 192 und zweiten Kniehebel 194 eingeschlossene Winkel während der Betätigung einen Winkel von 180° durchläuft und bei Erreichen der zweiten Betätigungsstellung einen Winkel von größer als 180° aufweist. Die überstreckte Stellung gewährleistet einen zuverlässigen Halt des Schiebeelements 170. Mit Einnahme der überstreckten Stellung erreicht das Schiebeelement 170 seine Endstellung. Während der Bewegung des Schiebeelements 170 gelangt die Anlagefläche 174 in Anlage mit der Grundplatte 134 des Koppelelements 132, wodurch das Koppelelement 132 bei einer Fortsetzung der Bewegung des Schiebeelements 170 mitgeführt wird. Das zweite mechanische Übertragungselement 20 wird dabei gleichfalls mitbewegt, wodurch die Parksperre aus einem aktiven bzw. dem eingelegten Zustand in einen nichtaktiven bzw. ausgelegten Zustand verbracht wird. Das Kraftfahrzeuggetriebe kann in diesem Zustand in eine von der Parksperrenstufe unterschiedliche Gangstufe wie beispielsweise D für Vorfährtsfahrbetrieb oder R für Rückwärtsfahrbetrieb geschaltet werden. Das Schalten des Kraftfahrzeuggetriebes kann beispielsweise mittels des Parkassistenzsystems gesteuert werden.

Bei oder nach Erreichen der überstreckten Stellung der Kniehebeleinrichtung 190, bei welcher die Ankeraufnahme 204 in den Wirkungsbereich des Shiftlockmagneten 202 gelangt ist, wird die Kniehebeleinrichtung 190 durch Bestromen des Shiftlockmagneten 202 festgelegt, wobei der Anker 203 mittels des Bestromens zum Ausfahren veranlasst wird und in die Ankeraufnahme 204 eingreift. Das zweite mechanische Übertragungselement 20 kann dadurch zuverlässig in einem gelösten Zustand der Parksperre gehalten werden.

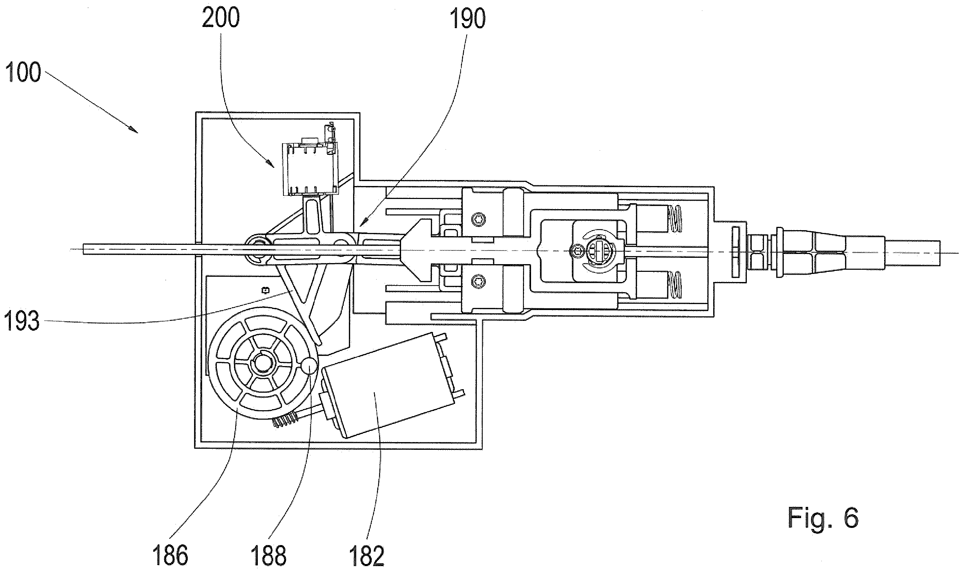

Fig. 6 zeigt eine schematische Draufsicht auf das Gehäuseteil 110 der in Fig. 5 gezeigten Parksperreneinrichtung 100 in einer dritten Betätigungsstellung, bei welcher der Mitnehmer 188 und der Ausleger 193 berührungsfrei sind. Die dritte Betätigungsstellung wird ausgehend von der zweiten Betätigungsstellung durch Drehen des Schneckenrades 186 im Uhrzeigersinn oder nach einem alternativ bevorzugten Ausführungsbeispiel gegen den Uhrzeigersinn mittels des Betriebs des Aktuators 182 erreicht. Durch die Arretierungs- und Freigabeeinrichtung 200 verharrt die Kniehebeleinrichtung 190 in der überstreckten Stellung, wodurch die Parksperre bei Erreichen der dritten Betätigungsstellung weiterhin gelöst bleibt.

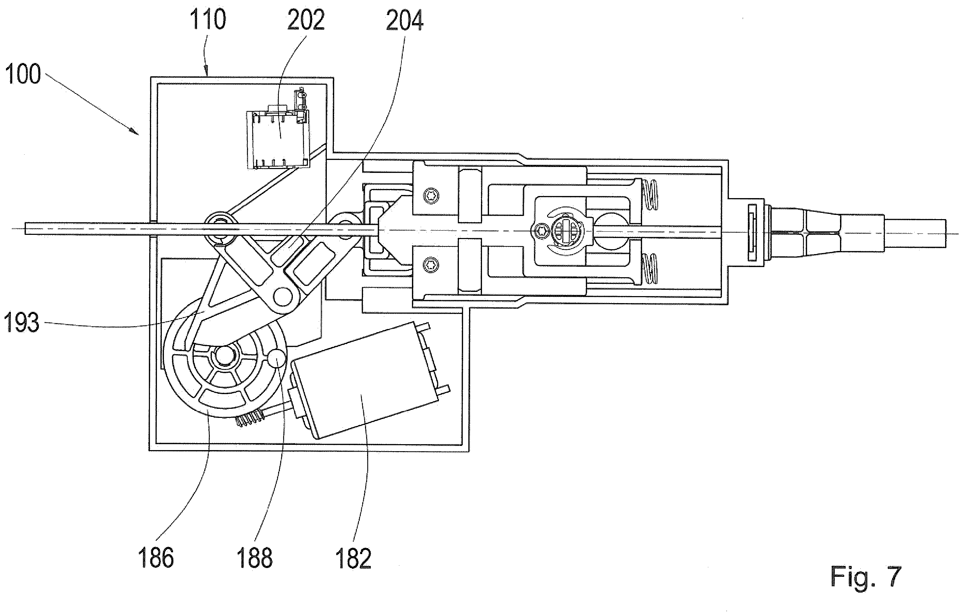

Fig. 7 zeigt eine schematische Draufsicht auf das Gehäuseteil 110 der in Fig. 1 gezeigten Parksperreneinrichtung 100 in einer vierten Betätigungsstellung, bei welcher die Komponenten der Parksperreneinrichtung bis auf die Antriebseinrichtung 180 die Ausgangsstellung eingenommen haben. Die vierte Betätigungsstellung kann ausgehend von der dritten Betätigungsstellung durch Einfahren des Ankers 203 des Shiftlockmagneten 202 erreicht werden. Das Einfahren des Ankers 203 erfolgt nach diesem bevorzugten Ausführungsbeispiel, indem der Shiftlockmagnet 202 in einen stromlosen Zustand versetzt wird. Dieser Zustand kann damit beispielweise auch bei Ausfall einer Stromversorgungseinheit, welche zur Stromversorgung des Shiftlockmagneten 202 vorgesehen ist, zwangsweise eingenommen werden. Dadurch kann die Parksperreneinrichtung mit einer Notfallfunktion versehen werden, durch welche die Parksperreneinrichtung automatisch ein Einlegen der Parksperre veranlasst. Damit kann das Kraftfahrzeug in einem Defektfall beispielsweise des Parkassistenzsystems gegen ein unbeabsichtigtes Wegrollen automatisch gesichert werden.

Zur Einnahme der Ausgangsstellung für die Parksperreneinrichtung 100 ist ausgehend von der vierten Betätigungsstellung das Schneckenrad 186 mittels des Betriebs des Aktuators 182 derart zu drehen, dass der Mitnehmer 188 in eine beispielhaft in Figur 1 gezeigte Position verbracht wird. Grundsätzlich kann der Mitnehmer 188 in einer Ausgangsstellung der Parksperreneinrichtung 100 eine Position einnehmen, in welcher der Mitnehmer 188 an dem Ausleger 193 vorzugsweise kraftfrei, jedoch wenigstens derart anliegt, dass die Parksperre im eingelegten Zustand verbleibt, oder zu dem Ausleger 193 beabstandet ist.

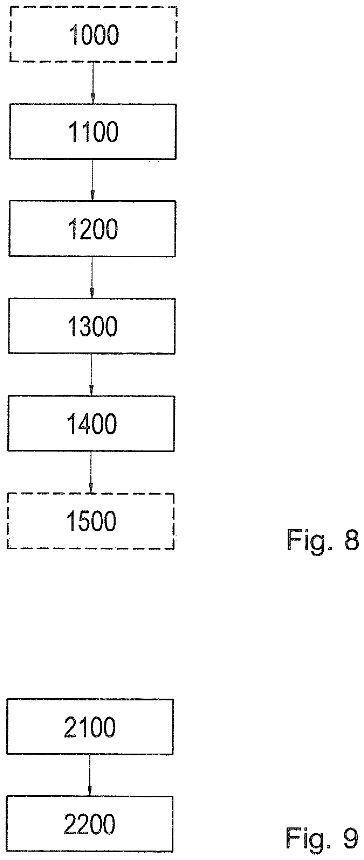

Fig. 8 zeigt ein Ablaufdiagramm eines Verfahrens zum Herstellen einer Parksperreinrichtung nach einem bevorzugten Ausführungsbeispiel, wobei es sich bei der Parksperreneinrichtung um eines der vorstehend bevorzugten Ausführungsbeispiele handeln kann. Das Verfahren umfasst einen Schritt 1100 des Bereitstellens einer Koppeleinrichtung zum Übertragen einer von dem ersten mechanischen Übertragungselement ausgehenden Bewegungskraft auf das zweite mechanische Übertragungselement, wobei die Koppeleinrichtung zwischen dem ersten und zweiten mechanischen Übertragungselement anordenbar und mit dem ersten und zweiten mechanischen Übertragungselement koppelbar ist. Das Verfahren umfasst ferner einen Schritt 1200 des Bereitstellens einer Entkoppeleinrichtung zum Entkoppeln einer Kopplung zwischen der Koppeleinrichtung und dem ersten oder zweiten mechanischen Übertragungselement in der Parksperrenstellung des Gangwahlhebels sowie einen Schritt 1300 des Bereitstellens eines Schiebeelements zum Bewegen des zweiten mechanischen Übertragungselements relativ zu dem ersten mechanischen Übertragungselement in dem Entkopplungszustand. Die Reihenfolge dieser Verfahrensschritte 1100, 1200, 1300 ist nicht zwingend. Bei den vorstehend beschriebenen Komponenten kann es sich jeweils um eine Komponente nach einem der vorstehend beschriebenen bevorzugten Ausführungsbeispiele handeln. Damit kann beispielsweise eine Parksperreneinrichtung nach einem der bevorzugten Ausführungsbeispiele hergestellt werden.

Das Verfahren umfasst des Weiteren einen Schritt 1400 des Anordnens der Koppeleinrichtung, der Entkoppeleinrichtung und des Schiebeelementes zum Koppeln der Koppeleinrichtung mit dem ersten und zweiten mechanischen Übertragungselement, der Entkoppeleinrichtung mit der Kopplung zwischen der Koppeleinrichtung und dem ersten und zweiten mechanischen Übertragungselement und des Schiebeelements mit der Koppeleinrichtung.

Optional kann dem Schritt 1400 des Anordnens ein Schritt 1500 des Koppelns der Koppeleinrichtung mit dem ersten und zweiten mechanischen Übertragungselement, der Entkoppeleinrichtung mit der Kopplung zwischen der Koppeleinrichtung und dem ersten und zweiten mechanischen Übertragungselement und des Schiebeelements mit der Koppeleinrichtung erfolgen. Damit kann eine bereits im Wirkzusammenhang gebrachte Parksperreneinrichtung bereitgestellt werden.

Ferner umfasst das Verfahren einen optionalen Schritt 1000 des Bereitstellens eines Gehäuses wenigstens zur Aufnahme der Koppeleinrichtung, der Entkoppeleinrichtung und des Schiebeelements. Dieser Verfahrensschritt 1000 erfolgt vorzugsweise vor dem Schritt 1400 des Anordnens. Dadurch sind die einzelnen Komponenten bereits in dem Gehäuse anordenbar und anschließend in dem Gehäuse miteinander koppelbar. Dabei kann der Schritt 1000 des Bereitstellens des Gehäuses in einer beliebigen Reihenfolge mit den anderen Verfahrensschritten 1100, 1200, 1300 des Bereitstellens der anderen Komponenten durchgeführt werden. Das Gehäuse kann eine Ausgestaltung nach einem der vorstehend beschriebenen bevorzugten Ausführungsbeispiele aufweisen.

Fig. 9 zeigt ein Ablaufdiagramm eines Verfahrens zum Auslegen einer Parksperre mittels einer Parksperreinrichtung nach einem bevorzugten Ausführungsbeispiel. Das Verfahren umfasst einen Schritt 2100 des Entkoppelns einer Kopplung zwischen der Koppeleinrichtung und dem ersten oder zweiten mechanischen Übertragungselement mittels der Entkoppeleinrichtung in der Parksperrenstellung des Gangwahlhebels sowie einen Schritt 2200 des Bewegens des zweiten mechanischen Übertragungselements relativ zu dem ersten mechanischen Übertragungselement in dem Entkopplungszustand bis zum Lösen der Parksperre. Dadurch kann auf einfache Weise die Parksperre unabhängig von einer Betätigung des Gangwahlhebels gelöst werden.

Die bevorzugten Ausführungsbeispiele zeigen, dass eine insbesondere für ein Parkassistenzsystem zum autonomen Parken des Kraftfahrzeuges geeignete Parksperreneinrichtung unter anderem als modulares und nachträglich einbaubares Bauteil bereitgestellt werden kann, welche zudem konstruktiv einfach und kompakt aufgebaut ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die genannten Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Parksperreneinrichtung (100) für ein Kraftfahrzeug, welches ein Kraftfahrzeuggetriebe mit einer Parksperre und einen mit der Parksperre gekoppelten Gangwahlhebel umfasst, welcher in eine Parksperrenstellung zum Einlegen der Parksperre und aus der Parksperrenstellung zum Lösen der Parksperre bewegbar ist, wobei ein erstes (10) und zweites mechanisches Übertragungselement (20) zwischen dem Gangwahlhebel und der Parksperre anordenbar oder angeordnet sind, wobei das erste mechanische Übertragungselement (10) mit dem Gangwahlhebel zum Übertragen einer von dem Gangwahlhebel ausgehenden Bewegungskraft und das zweite mechanische Übertragungselement (20) mit der Parksperre zum Übertragen einer von dem ersten mechanischen Übertragungselement (10) ausgehenden Bewegungskraft koppelbar oder gekoppelt sind, wobei die Parksperreneinrichtung (100) umfasst eine entlang einer Bewegungsachse bewegbare Koppeleinrichtung (130) zum Übertragen der von dem ersten mechanischen Übertragungselement (10) ausgehenden Bewegungskraft auf das zweite mechanische Übertragungselement (20), wobei die Koppeleinrichtung (130) zwischen dem ersten (10) und zweiten mechanischen Übertragungselement (20) anordenbar oder angeordnet und mit dem ersten (10) und zweiten mechanischen Übertragungselement (20) koppelbar oder gekoppelt ist; **gekennzeichnet durch**
eine Entkoppeleinrichtung (160) zum Entkoppeln einer Kopplung zwischen der Koppeleinrichtung (130) und dem ersten (10) oder zweiten mechanischen Übertragungselement (20) in der Parksperrenstellung des Gangwahlhebels, was einem Entkopplungszustand der Entkoppeleinrichtung (160) entspricht,
und
ein Schiebeelement (170) zum Bewegen des zweiten mechanischen Übertragungselements (20) relativ zu dem ersten mechanischen Übertragungselement (10) in dem Entkopplungszustand zum Lösen der Parksperre.

2. Parksperreneinrichtung (100) nach Anspruch 1, **dadurch gekennzeichnet, dass** die Koppeleinrichtung (130) mit dem ersten (10) oder zweiten mechanischen Übertragungselement (20) mittels einer Eingriffseinrichtung umfassend wenigstens ein quer zu der Bewegungsachse bewegbares Eingriffselement (140) und eine Aufnahme, in welche das Eingriffselement (140) eingreifbar ist, lösbar gekoppelt oder koppelbar und mit dem anderen mechanischen Übertragungselement (20) zueinander unverschieblich verbunden oder verbindbar ist.

3. Parksperreneinrichtung (100) nach Anspruch 2, **dadurch gekennzeichnet, dass** die Entkoppeleinrichtung (160) ein verschiebbares Entkoppelelement (162) zum Bewegen des Eingriffselements (140) in einen eingriffsfreien Zustand aufweist.

4. Parksperreneinrichtung (100) nach Anspruch 3, **dadurch gekennzeichnet, dass** das Entkoppelelement (162) entlang der Bewegungsachse verschiebbar ist und eine Gleitfläche (166) aufweist, entlang welcher ein mit dem wenigstens einem Eingriffselement (140) ortsfest verbundenes Gleitelement (141) gleitbar ist, wobei sich die Gleitfläche (166) schräg zu einer Bewegungsachse des wenigstens einen Eingriffselements (140) erstreckt.

5. Parksperreneinrichtung (100) nach Anspruch 4, **dadurch gekennzeichnet, dass** das Entkoppelelement (162) und das Schiebeelement (170) eine bauliche Einheit ausformen, wobei das Schiebeelement (170) eine Anlagefläche (174) zur Anlage mit der Koppeleinrichtung (130) aufweist, wobei die Gleitfläche (166) der Anlagefläche (174) in Schieberichtung derart vorgelagert ist, dass bei Verschieben der baulichen Einheit zunächst das wenigstens eine Eingriffselement (140) in den eingriffsfreien Zustand bewegbar und anschließend die Koppeleinrichtung (130) verschiebbar ist.

6. Parksperreneinrichtung (100) nach einem der vorherigen Ansprüche, **gekennzeichnet durch** wenigstens eine Antriebseinrichtung (180) zum Antreiben der Entkoppeleinrichtung (160) und des Schiebeelements (170).

7. Parksperreneinrichtung (100) nach Anspruch 6, **dadurch gekennzeichnet, dass** die Antriebseinrichtung (180) ein Schneckengetriebe mit einer Schnecke (184) und ein mit der Schnecke (184) gekoppeltes Schneckenrad (186) umfasst, wobei das Schneckenrad (186) einen Mitnehmer (188) zum Antreiben einer Kniehebeleinrichtung (190) aufweist, welche mit der Entkoppeleinrichtung (160) und dem Schiebeelement (170) gekoppelt oder koppelbar ist.

8. Parksperreneinrichtung (100) nach Anspruch 7, **dadurch gekennzeichnet, dass** die Kniehebeleinrichtung (190) einen ersten (192) und zweiten Kniehebel (194) aufweist, welche über eine Kniegelenkverbindung (196) miteinander verbunden sind, wobei der erste Kniehebel (192) einen Ausleger (193) umfasst, welcher eine Gleitfläche aufweist, entlang welcher der Mitnehmer (188) gleitbar ist, und wobei der zweite Kniehebel (194) mit der Entkoppeleinrichtung (160) und dem Schiebeelement (170) gekoppelt oder koppelbar ist.

9. Parksperreneinrichtung (100) nach einem der Ansprüche 6 bis 8, **dadurch gekennzeichnet, dass** die Antriebseinrichtung (180) mit einer Steuer- und/oder Regeleinrichtung zum Steuern und/oder Regeln der Antriebseinrichtung (180) gekoppelt oder koppelbar ist.

10. Parksperreneinrichtung nach einem der vorherigen Ansprüche, **gekennzeichnet durch** eine Arretierungs- und Freigabeeinrichtung (200) zum Arretieren des Schiebeelements (170) in einer von einer Ausgangsstellung unterschiedlichen Position und zum Freigeben der Arretierung.

11. Parksperreneinrichtung (100) nach Anspruch 10, **dadurch gekennzeichnet, dass** die Arretierungs- und Freigabeeinrichtung (200) einen Shiftlockmagneten (202) mit einem Anker (203) umfasst, welcher bei Bestromung des Shiftlockmagneten (202) zum Eingriff in eine mit dem Schiebeelement (170) gekoppelte Ankeraufnahme (204) ausfahrbar ist und bei Nichtbestromung des Shiftlockmagneten (202) eine einen Nichteingriffszustand definierende Position einnimmt.

12. Parksperreneinrichtung (100) nach einem der vorherigen Ansprüche, **gekennzeichnet durch** eine Rückstelleinrichtung (210) zum Rückstellen des zweiten mechanischen Übertragungselements (20) in seine Ausgangsposition.

## Claims

1. Parking lock device (100) for a motor vehicle which comprises a motor vehicle gearbox with a parking lock and comprises a gear selector lever coupled to the parking lock, which gear selector lever is movable into a parking lock position in order to engage the parking lock and out of the parking lock position in order to release the parking lock, wherein a first (10) and second mechanical transmission element (20) are arrangeable or arranged between the gear selector lever and the parking lock, wherein the first mechanical transmission element (10) is couplable or coupled to the gear selector lever in order to transmit a movement force originating from the gear selector lever, and the second mechanical transmission element (20) is couplable or coupled to the parking lock in order to transmit a movement force originating from the first mechanical transmission element (10), wherein the parking lock device (100) comprises a coupling device (130) which is movable along a movement axis and which serves for transmitting the movement force originating from the first mechanical transmission element (10) to the second mechanical transmission element (20), wherein the coupling device (130) is arrangeable or arranged between the first (10) and second mechanical transmission element (20) and is couplable or coupled to the first (10) and second mechanical transmission element (20); **characterized by**
a decoupling device (160) for decoupling a coupling between the coupling device (130) and the first (10) or second mechanical transmission element (20) in the parking lock position of the gear selector lever, which corresponds to a decoupling state of the decoupling device (160), and a slide element (170) for moving the second mechanical transmission element (20) relative to the first mechanical transmission element (10) in the decoupling state in order to release the parking lock.

2. Parking lock device (100) according to Claim 1, **characterized in that** the coupling device (130) is releasably coupled or couplable to the first (10) or second mechanical transmission element (20) by means of an engagement device comprising at least one engagement element (140), which is movable transversely with respect to the movement axis, and comprising a receptacle into which the engagement element (140) is engageable, and is connected or connectable to the other mechanical transmission element (20) in a mutually non-displaceable manner.

3. Parking lock device (100) according to Claim 2, **characterized in that** the decoupling device (160) has a displaceable decoupling element (162) for moving the engagement element (140) into an engagement-free state.

4. Parking lock device (100) according to Claim 3, **characterized in that** the decoupling element (162) is displaceable along the movement axis and has a slide surface (166) along which a slide element (141) connected positionally fixedly to the at least one engagement element (140) is slidable, wherein the slide surface (166) extends obliquely with respect to a movement axis of the at least one engagement element (140) .

5. Parking lock device (100) according to Claim 4, **characterized in that** the decoupling element (162) and the slide element (170) form a structural unit, wherein the slide element (170) has a contact surface (174) for contact with the coupling device (130), wherein the slide surface (166) is positioned in front of the contact surface (174) in a sliding direction such that, in the event of displacement of the structural unit, firstly the at least one engagement element (140) is movable into the engagement-free state, and subsequently the coupling device (130) is displaceable.

6. Parking lock device (100) according to one of the preceding claims, **characterized by** at least one drive device (180) for driving the decoupling device (160) and the slide element (170).

7. Parking lock device (100) according to Claim 6, **characterized in that** the drive device (180) comprises a worm gearing with a worm (184) and with a worm wheel (186) coupled to the worm (184), wherein the worm wheel (186) has a driver (188) for driving a knee lever device (190) which is coupled or couplable to the decoupling device (160) and to the slide element (170).

8. Parking lock device (100) according to Claim 7, **characterized in that** the knee lever device (190) has a first (192) and second knee lever (194) which are connected to one another by means of a knee lever connection (196), wherein the first knee lever (192) comprises a jib (193) which has a slide surface along which the driver (188) is slidable, and wherein the second knee lever (194) is coupled or couplable to the decoupling device (160) and to the slide element (170).

9. Parking lock device (100) according to one of Claims 6 to 8, **characterized in that** the drive device (180) is coupled or couplable to an open-loop and/or closed-loop control device for the open-loop and/or closed-loop control of the drive device (180).

10. Parking lock device according to one of the preceding claims, **characterized by** an arresting and release device (200) for arresting the slide element (170) in a position which differs from an initial position and for releasing the arresting action.

11. Parking lock device (100) according to Claim 10, **characterized in that** the arresting and release device (200) comprises a shift lock magnet (202) with an armature (203) which, when the shift lock magnet (202) is electrically energized, can be deployed so as to engage into an armature receptacle (204) coupled to the slide element (170) and which, when the shift lock magnet (202) is not electrically energized, assumes a position which defines a state of non-engagement.

12. Parking lock device (100) according to one of the preceding claims, **characterized by** a return device (210) for returning the second mechanical transmission element (20) into its initial position.

## Revendications

1. Dispositif de frein de stationnement (100) pour un véhicule automobile comprenant une boîte de vitesses de véhicule automobile avec un frein de stationnement et un levier de vitesses couplé au frein de stationnement et pouvant être déplacé dans une position de frein de stationnement servant à passer le frein de stationnement et hors de la position de frein de stationnement servant à desserrer le frein de stationnement, un premier (10) et un deuxième élément de transmission mécanique (20) étant disposés ou pouvant être disposés entre le levier de vitesses et le frein de stationnement, le premier élément de transmission mécanique (10) étant couplé ou pouvant être couplé au levier de vitesses pour transmettre une force de mouvement partant du levier de vitesses et le deuxième élément de transmission mécanique (20) étant couplé ou pouvant être couplé au frein de stationnement pour transmettre une force de mouvement partant du premier élément de transmission mécanique (10), le dispositif de frein de stationnement (100) comprenant un dispositif de couplage (130) mobile le long d'un axe de déplacement pour la transmission de la force de mouvement du premier élément de transmission mécanique (10) au deuxième élément de transmission mécanique (20), le dispositif de couplage (130) étant disposé ou pouvant être disposé entre le premier (10) et le deuxième élément de transmission mécanique (20) et étant couplé ou pouvant être couplé au premier (10) et au deuxième élément de transmission mécanique (20) ; **caractérisé par** :
un dispositif de découplage (160) servant à découpler un couplage entre le dispositif de couplage (130) et le premier (10) ou deuxième élément de transmission mécanique (20) dans la position de frein de stationnement du levier de vitesses, ce qui correspond à un état de découplage du dispositif de découplage (160) ; et
un élément poussoir (170) servant à déplacer le deuxième élément de transmission mécanique (20) par rapport au premier élément de transmission mécanique (10) dans l'état de découplage pour desserrer le frein de stationnement.

2. Dispositif de frein de stationnement (100) selon la revendication 1, **caractérisé en ce que** le dispositif de couplage (130) est couplé ou peut être couplé de façon amovible au premier (10) ou au deuxième élément de transmission mécanique (20) à l'aide d'un dispositif de mise en prise comprenant au moins un élément de mise en prise (140) pouvant être déplacé transversalement à l'axe de déplacement et un logement dans lequel l'élément de mise en prise (140) peut s'engrener et est relié ou peut être relié de façon coulissante à l'autre élément de transmission mécanique (20).

3. Dispositif de frein de stationnement (100) selon la revendication 2, **caractérisé en ce que** le dispositif de découplage (160) comporte un élément de découplage (162) pouvant être coulissé en vue de déplacer l'élément de mise en prise (140) dans un état hors mise en prise.

4. Dispositif de frein de stationnement (100) selon la revendication 3, **caractérisé en ce que** l'élément de découplage (162) peut être coulissé le long de l'axe de déplacement et comporte une surface de glissement (166) le long de laquelle un élément glissant (141) est relié fixement sur place à l'au moins un élément de mise en prise (140), la surface de glissement (166) s'étendant de façon oblique par rapport à un axe de déplacement de l'au moins un élément de mise en prise (140).

5. Dispositif de frein de stationnement (100) selon la revendication 4, **caractérisé en ce que** l'élément de découplage (162) et l'élément poussoir (170) forment une unité de construction, l'élément poussoir (170) comportant une surface d'appui (174) pour l'appui avec le dispositif de couplage (130), la surface de glissement (166) de la surface d'appui (174) étant disposée de telle sorte en amont dans la direction de poussée qu'en cas de coulissement de l'unité de construction, l'au moins un élément de mise en prise (140) puisse être déplacé d'abord dans un état hors mise en prise avant que le dispositif de couplage (130) puisse coulisser.

6. Dispositif de frein de stationnement (100) selon l'une quelconque des revendications précédentes, **caractérisé par** la présence d'au moins un dispositif d'entraînement (180) servant à entraîner le dispositif de découplage (160) et l'élément poussoir (170).

7. Dispositif de frein de stationnement (100) selon la revendication 6, **caractérisé en ce que** le dispositif d'entraînement (180) comporte un engrenage sans fin avec une vis sans fin (184) et une roue de vis sans fin (186) couplée à la vis sans fin (184), la roue de vis sans fin (186) comportant un doigt d'entraînement (188) pour entraîner un dispositif de levier à genouillère (190) couplé ou pouvant être couplé au dispositif de découplage (160) et à l'élément poussoir (170).

8. Dispositif de frein de stationnement (100) selon la revendication 7, **caractérisé en ce que** le dispositif de levier à genouillère (190) comporte un premier (192) et un deuxième levier à genouillère (194) reliés entre eux via une liaison d'articulation de genouillère (196), le premier levier à genouillère (192) comprenant un cantilever (193) comportant une surface de glissement le long de laquelle le doigt d'entraînement (188) peut glisser et le deuxième levier à genouillère (194) étant couplé ou pouvant être couplé au dispositif de découplage (160) et à l'élément poussoir (170).

9. Dispositif de frein de stationnement (100) selon l'une quelconque des revendications 6 à 8, **caractérisé en ce que** le dispositif d'entraînement (180) est couplé ou peut être couplé à un dispositif de commande et/ou de réglage pour commander et/ou régler le dispositif d'entraînement (180).

10. Dispositif de frein de stationnement selon l'une quelconque des revendications précédentes, **caractérisé par** la présence d'un dispositif d'arrêt et de libération (200) servant à arrêter l'élément poussoir (170) dans une position différente d'une position de départ et à libérer l'arrêt.

11. Dispositif de frein de stationnement (100) selon la revendication 10, **caractérisé en ce que** le dispositif d'arrêt et de libération (200) comprend un aimant de verrouillage dans la position de stationnement (202) avec une ancre (203) pouvant être sortie en cas d'alimentation de l'aimant de verrouillage dans la position de stationnement (202) pour réaliser la mise en prise dans un logement d'ancre (204) couplé à l'élément poussoir (170) et se trouvant, en cas de non-alimentation de l'aimant de verrouillage dans la position de stationnement (202), dans une position définissant un état de non-mise en prise.

12. Dispositif de frein de stationnement (100) selon l'une quelconque des revendications précédentes, **caractérisé par** la présence d'un dispositif de rappel (210) servant à rappeler le deuxième élément de transmission mécanique (20) dans sa position de départ.
